# EUROPEAN PATENT APPLICATION

(11) **EP 4 311 595 A1**
(43) Date of publication of application: **31.01.2024**
(21) Application number: 23187622.8
(22) Date of filing: 25.07.2023
(51) Int. Cl.: B01D 53/30, B01D 53/32, C01B 32/50

(54) **CARBON DIOXIDE RECOVERY SYSTEM**

(30) Priority: 28.07.2022 JP 2022120698
(71) Applicant: DENSO CORPORATION, Aichi-pref. 448-8661 (JP)
(72) Inventor: Hiroki, AOSHIMA, Kariya-city, Aichi-pref.,, 448-8661 (JP); Yousuke, NAKAMURA, Kariya-city, Aichi-pref.,, 448-8661 (JP); Hiroyuki, TAKIKAWA, Kariya-city, Aichi-pref.,, 448-8661 (JP)
(74) Representative: Winter, Brandl - Partnerschaft mbB

(57) **Abstract**

A carbon dioxide recovery system includes a main controller (1) and unit controllers (17A-17C). The main controller provides guidelines to the unit controllers for a plurality of recovery units (10A-10C). The guideline serves as a guideline for controlling operations of components including an electrochemical cell (12a), a channel on/off valve (11), a pump (13), and a channel switching valve (14). Each one of the unit controllers determines a control content for each one of components based on the guideline.

## Description

### [TECHNICAL FIELD]

The present disclosure relates to a carbon dioxide recovery system which recovers carbon dioxide from the atmosphere containing carbon dioxide.

### [BACKGROUND]

JP2018-533470A proposes a gas separation system that separates carbon dioxide from a mixed gas containing carbon dioxide by an electrochemical reaction. In this gas separation system, the mixed gas containing carbon dioxide is introduced into a housing in which an electrochemical cell is disposed. In a charge mode in which electrons are directed to the negative electrode of the electrochemical cell, an electroactive material provided on the negative electrode is reduced. Therefore, the electroactive material on the negative electrode is bonded to the carbon dioxide, and the carbon dioxide is separated from the mixed gas. On the other hand, in a discharge mode in which an electron flow is generated in a direction opposite to that in the charge mode, the electroactive material on the negative electrode is oxidized. As a result, the carbon dioxide is desorbed from the electroactive material on the negative electrode.

### [SUMMARY]

In order to increase a recovery amount of carbon dioxide, one solution may increase a number of units including housings accommodating electrochemical cells such as those described above and connects these units in parallel to the tank that stores the carbon dioxide. If this configured in employed, a large amount of carbon dioxide may be efficiently recovered by alternately performing an adsorbing operation in at least one of the plurality of units and a desorbing and recovering operation in the other one of the units in an orderly manner.

However, if a plurality of units are provided, single controller may face too much processing load. Furthermore, since the number of connection lines connecting the controller and the plurality of units also increases, there is a risk that the wiring effort and the cost of the connection lines may be increased.

The present disclosure has been made in view of the above points. It is an object of the present disclosure to provide a carbon dioxide recovery system capable of suppressing processing load and lowering the wiring effort and the cost.

One aspect of a carbon dioxide recovery system employs the following configuration in order to achieve the above objectives. A carbon dioxide recovery system which recovers carbon dioxide from the atmosphere containing carbon dioxide, comprising:
a carbon dioxide recovery tank (3) which accumulates recovered carbon dioxide; a recovery unit group (10) including a plurality of recovery units (10A, 10B, 10C) connected in parallel to the carbon dioxide recovery tank, separating carbon dioxide from the atmosphere and transferring a separated carbon dioxide to the carbon dioxide recovery tank; and
a main controller (1), including at least one processor, which controls the recovery unit group, wherein
each of the plurality of recovery units included in the recovery unit group includes: an electrochemical cell (12a) which is disposed in a housing, adsorbs carbon dioxide by applying an adsorption potential and desorbs an adsorbed carbon dioxide by applying a desorption potential;
a channel on/off unit (11) which enables the housing to introduce the atmosphere by opening an inlet of the housing when the electrochemical cell adsorbs carbon dioxide and disable the housing to isolate from the atmosphere by closing the inlet of the housing when the electrochemical cell desorbs carbon dioxide;
a transfer unit (13, 14) which sucks carbon dioxide desorbed from the electrochemical cell from an inside of the housing and transfer carbon dioxide to a carbon dioxide recovery tank; and
unit controllers (17), including at least one processor, which control operation of the electrochemical cell, the on/off unit, and the transfer unit, wherein
the main controller is configured to provide each one of the unit controllers of the plurality of recovery units with control guidelines which serve as guidelines for controlling operations of the electrochemical cell, the channel on/off unit, and the transfer unit by the unit controllers, and wherein
the unit controllers are configured to determine control contents of the electrochemical cell, the channel on/off unit, and the transfer unit based on the control guidelines.

With the configuration described above, the main controller may just provide the unit controllers of the plurality of recovery units with control guidelines that serve as guidelines for the unit controllers to control operations of the electrochemical cell, the channel on/off unit, and the transfer unit. Specific control contents of the electrochemical cell, the channel on/off unit, and the transfer unit are determined by each of the unit controllers based on the control guidelines. Therefore, it is possible to suppress an increase in a processing load on the main controller. In addition, since it is not necessary to perform wiring for directly connecting the main controller to the electrochemical cells, the channel on/off units, and the transfer units of the recovery unit, it is possible to reduce wiring work and wiring costs.

Furthermore, since the roles of the main controller 1 and the unit controller 17 are defined as described above, it is possible to easily add a new recovery unit in addition to the recovery units 10A-10C later or construct a new system with different numbers of the recovery units.

Another aspect of a carbon dioxide recovery system employs the following configuration in order to achieve the above objectives. A carbon dioxide recovery system which recovers carbon dioxide from the atmosphere containing carbon dioxide, comprising:
a carbon dioxide recovery tank (103) which accumulates recovered carbon dioxide;
a holding unit group (110) including a plurality of holding units (110A, 11 0B, 110C) connected in parallel to the carbon dioxide recovery tank, separating and holding carbon dioxide from the atmosphere and desorbing a held carbon dioxide; and
a pump (107) which draw carbon dioxide desorbed from each of the plurality of holding units and transfers carbon dioxide to the carbon dioxide recovery tank; and
a main controller (101), including at least one processor, which controls the holding unit group, wherein
each of the plurality of holding units included in the holding unit group includes: an electrochemical cell which is disposed in a housing, adsorbs carbon dioxide by applying an adsorption potential and desorbs an adsorbed carbon dioxide by applying a desorption potential;
a channel on/off unit which enables the housing to introduce the atmosphere by opening an inlet of the housing when the electrochemical cell adsorbs carbon dioxide and disable the housing to isolate from the atmosphere by closing the inlet of the housing when the electrochemical cell desorbs carbon dioxide; and
a unit controller, including at least one processor, which controls operations of the electrochemical cell and the channel on/off unit, wherein
the main controller is configured to provide each one of the unit controllers of the plurality of holding units with control guidelines which serve as guidelines for controlling operations of the electrochemical cell and the channel on/off unit by the unit controllers, and wherein
the unit controllers are configured to determine control contents of the electrochemical cell and the channel on/off unit based on the control guidelines.

A carbon dioxide recovery system according to another aspect provides a common pump for a plurality of holding units. This common pump draws carbon dioxide desorbed from each of the plurality of holding units and transfers carbon dioxide to a carbon dioxide recovery tank.

Thus, although there are some differences in configuration between the carbon dioxide recovery system according to one aspect and the carbon dioxide recovery system according to another aspect, the carbon dioxide recovery system according to another aspect can achieve a similar effect as that in the carbon dioxide recovery system according to one aspect.

In order to facilitate the understanding of the present disclosure, the reference symbols or numerals in parentheses in "Claims" are merely added as examples of correspondence relationships with concrete structures in the embodiments described below, so that limiting the claim scope is not intended.

Technical features described in "Claims" other than the above-mentioned features become apparent from the description of the embodiments and the accompanying drawings.

### [BRIEF DESCRIPTION OF DRAWINGS]

FIG. 1 is an overall configuration diagram showing the overall configuration of a carbon dioxide recovery system according to a first embodiment.
FIG. 2 is a functional block diagram showing main functions of a main controller and unit controllers, respectively.
FIG. 3 is a configuration diagram showing a configuration of a recovery unit.
FIG. 4A is an explanatory diagram for explaining an adsorption mode included in a series of control sequence.
FIG. 4B is an explanatory diagram for explaining a scavenging mode included in the series of control sequence.
FIG. 4C is an explanatory diagram for explaining a desorption mode included in the series of control sequence.
FIG. 4D is an explanatory diagram for explaining a recovery mode included in the series of control sequence.
FIG. 5 is a flowchart showing processing executed by an external information arbitration unit of the main controller.
FIG. 6 is a flowchart showing an external information arbitration processing in the flowchart of FIG. 5.
FIG. 7 is a flowchart showing a target collection rate calculation process in the flowchart of FIG. 6.
FIG. 8 is a flowchart showing a target reduction rate calculation process in the flowchart of FIG. 6.
FIG. 9 is a flowchart showing processing executed by a control guideline setting unit of the main controller.
FIG. 10 is a diagram showing various signals transmitted and received between the main controller and the unit controller.
FIG. 11 is a flowchart showing processing executed by a recovery arbitration unit of the main controller.
FIG. 12 is a flowchart showing a recovery period process in the flowchart of FIG. 11.
FIG. 13 is a diagram showing an example of a preferential recovery operation in which a recovery transition permission notification is preferentially transmitted to the unit controller of the recovery unit with the largest amount of an assumed CO2 recovery amount.
FIG. 14 is a diagram showing an example of a simultaneous recovery operation in which the recovery transition permission notification is simultaneously transmitted to the unit controller of a plurality of recovery units.
FIG. 15 is a part of a flowchart showing process executed by a CO2 recovery process unit of the unit controller.
FIG. 16 is a remaining part of a flowchart showing process executed by the CO2 recovery process unit of the unit controller.
FIG. 17 is a flowchart showing map creation process for creating an adsorption amount change map data.
FIG. 18 is a diagram showing an operation of each part when creating the adsorption amount change map data.
FIG. 19A is an explanatory diagram for explaining an example of a procedure of a method for estimating the carbon dioxide maximum adsorption amount and the maximum adsorption amount time of an electrochemical cell.
FIG. 19B is an explanatory diagram for explaining an example of a procedure of a method for estimating the carbon dioxide maximum adsorption amount and the maximum adsorption amount time of an electrochemical cell.
FIG. 19C is an explanatory diagram for explaining an example of a procedure of a method for estimating the carbon dioxide maximum adsorption amount and the maximum adsorption amount time of an electrochemical cell.
FIG. 20 is a graph showing an example of the adsorption amount change map data.
FIG. 21 is a flowchart showing map data update processing.
FIG. 22 is an explanatory diagram for explaining map data update processing.
FIG. 23 is a diagram showing an example of updated adsorption amount change map data.
FIG. 24 is a configuration diagram showing the configuration of a carbon dioxide recovery system according to a second embodiment.

### [DETAILED DESCRIPTION]

### (First embodiment)

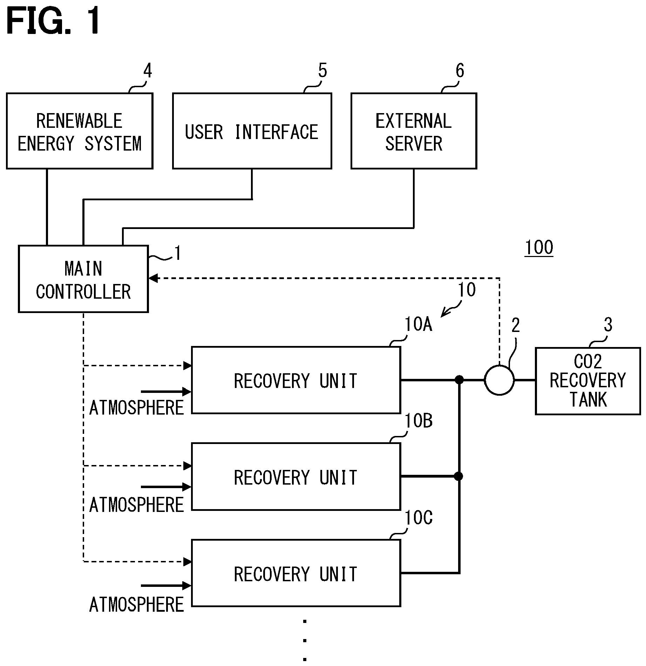

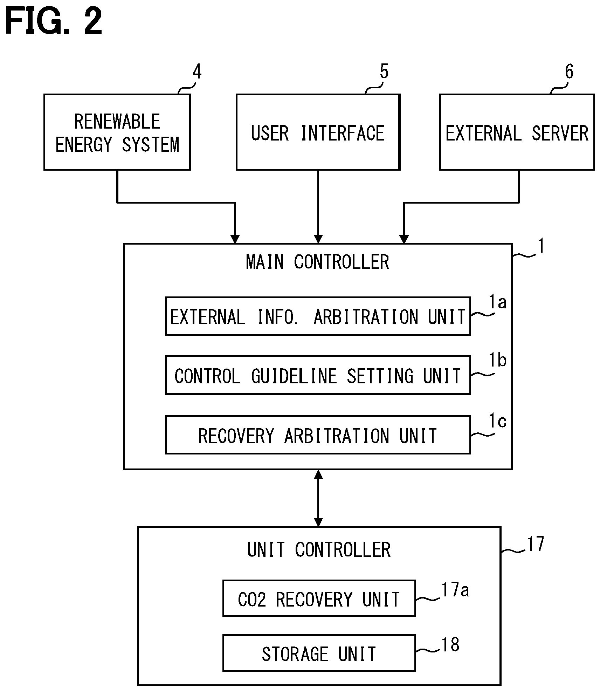

Hereinafter, a carbon dioxide recovery system according to a first embodiment of the present disclosure is described in detail with reference to the drawings. In the drawings, the same or equivalent portions are denoted by the same reference numerals. The carbon dioxide recovery system according to this embodiment recovers carbon dioxide from the atmosphere containing carbon dioxide. The atmosphere from which carbon dioxide has been removed is discharged to an outside. In this specification, claims, and drawings, carbon dioxide may be referred to as CO2 or CO2. FIG. 1 is an overall configuration diagram showing the overall configuration of a carbon dioxide recovery system 100 according to a first embodiment. FIG. 2 is a functional block diagram showing main functions of a main controller 1 and unit controllers 17, respectively.

As shown in FIG. 1, the carbon dioxide recovery system 100 includes a main controller 1, a plurality of recovery units 10A, 10B and 10C, a CO2 sensor 2, and a CO2 recovery tank 3. The plurality of recovery units 10A, 10B and 10C may be collectively referred to as a recovery unit group 10. The recovery units 10A, 10B and 10C may be also referred to as the recovery units 10A-10C. The recovery unit group 10 includes a plurality of recovery units 10A-10C connected in parallel to the carbon dioxide recovery tank 3. Each one of the plurality of the recovery units 10A-10C separates carbon dioxide from the atmosphere by absorbing carbon dioxide. Each one of the plurality of the recovery units 10A-10C transfers the separated carbon dioxide to the carbon dioxide recovery tank 3.

The main controller 1 includes a well-known microcomputer including a central processing unit (i.e., CPU), a read only memory (i.e., ROM), a random access memory (i.e., RAM) and the like, and peripheral devices thereof. The main controller 1, including at least one processor, controls a recovery unit group. The peripheral devices include a first transmitter/receiver unit that communicates with a renewable energy system 4, a user interface 5, and an external server 6, and a second transmitter/receiver unit that communicates with the unit controllers 17 provided with each of the plurality of recovery units 10A-10C.

The renewable energy system 4 includes, for example, a solar power source panel and a storage battery. Electric power generated by the solar power source panel is used as electric power for operating the carbon dioxide recovery system 100. Excessive power of the power generated by the solar power source panel is stored in the storage battery. The power stored in the storage battery is supplied as an operating electric power to the carbon dioxide recovery system 100 as needed, such as when the amount of power generated by the solar power source panel is small. The main controller 1 of the carbon dioxide recovery system 100 communicates with a controller of the renewable energy system 4, and acquires, as one of information indicating the external environment, for example, an amount of power which the renewable energy system 4 can supply to the carbon dioxide recovery system 100. The renewable energy system 4 may generate renewable energy using, for example, wind power, waterpower, geothermal power, etc., other than a solar power.

The user interface 5 receives user demands regarding an operation of the carbon dioxide recovery system 100 and supplies the main controller 1 with information regarding the user demands. Thereby, the main controller 1 can acquire information about the user demands. Information relating to the user demands supplied by the user interface 5 to the main controller 1 includes, for example, an emergency stop request to immediately stop the carbon dioxide recovery system 100, a normal stop request to stop operations of each recovery unit 10A to 10C after completing controls for carbon dioxide recovery being performed in each recovery unit 10A-10C, a request to improve an amount of carbon dioxide recovery, a request to suppress energy consumption, and information relating a scheduled stop time to stop the carbon dioxide recovery system 100, etc.

The external server 6 provides the main controller 1 with information on the occurrence or prediction of occurrence of disasters such as earthquakes, tsunamis, and tornados, and information on weather or weather forecasts such as rain, snow, temperature, humidity, and typhoons. As a result, the main controller 1 can acquire disaster-related information and weather-related information as information indicating the external environment. As a result, the external environment includes an occurrence of a disaster and condition of supply energy for operating the carbon dioxide recovery system.

As shown in FIG. 2, the main controller 1 arbitrates information (external information) acquired from at least one of the renewable energy system 4, the user interface 5, and the external server 6, and serves as the basis for determining the control guideline. It has an external information arbitration unit 1a that selects external information to be used and determines a control target based on the selected external information. The main controller 1 also has a control guideline setting unit 1b that sets a control guideline based on the control target determined by the external information arbitration unit 1a. The control guideline setting unit 1b sets, as the control guideline to be provided to the plurality of recovery units 10A-10C, at least one of, for example, a command to stop, a command to improve a carbon dioxide recovery amount, a command to reduce an energy consumption, a command to perform a normal operation, and a command to set an operation time. The main controller 1 is configured to provide the unit controller 17 with at least one of a command to stop, a command to improve a carbon dioxide recovery amount, a command to reduce an energy consumption, a command to perform a normal operation, and a command to set an operating time as the control guideline. The main controller 1 is configured to provide a command to stop to the unit controller 17 as the control guideline based on at least one of an external environment, an abnormality in the carbon dioxide recovery system, and a stop request from a user. The command to stop includes a normal stop command to stop each of the recovery units 10A-10C after finishing the control for carbon dioxide recovery being executed in each of the recovery units 10A-10C, and an emergency stop command to stop each of the recovery units 10A-10C by interrupting the control for carbon dioxide recovery being executed. The main controller 1 is configured to provide the normal stop command or the emergency stop command in accordance with an emergency degree of at least one of an external environment, an abnormality in the carbon dioxide recovery system, and a stop request from a user. Further, if the plurality of recovery units 10A-10C simultaneously request transition to the recovery mode in which the recovered carbon dioxide is transferred to the CO2 recovery tank 3, the main controller 1 has a recovery arbitration unit 1c which arbitrates transition to the recovery mode of the plurality of recovery units 10A-10C.

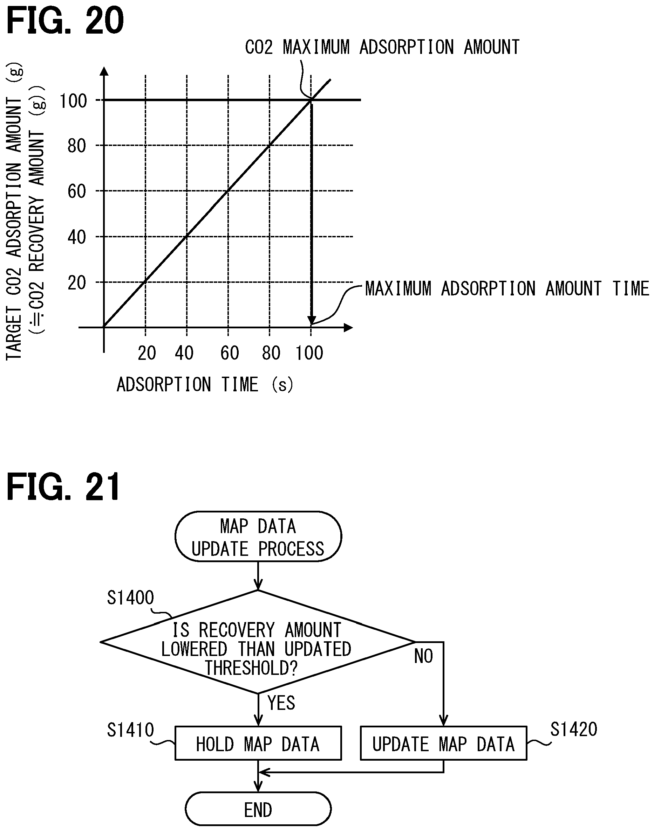

The unit controller 17 is provided for each one of the recovery units 10A-10C. The unit controller 17 includes, similar to the main controller 1, a well-known microcomputer components such as CPU, ROM, RAM, etc. and its peripheral devices. The unit controller 17, including at least one processor, controls operation of the electrochemical cell 12a, the channel on/off valve 11 and the pump 13 (the transfer unit). The peripheral device includes a transmitter/receiver unit that communicates with the main controller 1 and the like, a storage unit 18 having a storage medium, and the like. The storage unit 18 stores an adsorption amount change map data. The adsorption amount change map data, as shown in FIG. 20, indicates a relationship between a target carbon dioxide adsorption amount and an adsorption mode execution time (adsorption time). The adsorption amount change map data and how to use it are described later in detail.

As shown in FIG. 2, the unit controller 17 includes a CO2 recovery unit 17a which controls various devices to be controlled included in each of the recovery units 10A-10C to recover carbon dioxide and transfers the recovered carbon dioxide to the CO2 recovery tank 3. The CO2 recovery unit 17a of the unit controller 17 determines control contents, i.e., details of the control, based on the control guideline obtained from the main controller 1. The control contents, i.e., the details of the control are used to control behavior of the component of the recovery units 10A-10C including at least one of the electrochemical cell 12a, the channel on/off valve 11 as an opening/closing unit, the pump 13 as a transferring unit and the channel switching valve 14 etc. As described above, the main controller 1 is configured to provide each one of the unit controllers 17A-17C of the plurality of recovery units 10A-10C with control guidelines which serve as guidelines for controlling operations of the electrochemical cell 12a, the channel on/off valve (unit) 11, and the pump 13 (transfer unit) by the unit controllers 17A-17C. The unit controllers 17A-17C are configured to determine control contents of the electrochemical cell 12a, the channel on/off valve 11 (unit), and the pump 13 (transfer unit) based on the control guidelines. Then, the CO2 recovery unit 17a controls operations of the electrochemical cell 12a, the channel on/off valve 11, the pump 13, the channel switching valve 14, etc., according to the determined control details.

The general functions and roles of the main controller 1 and the unit controller 17 have been described above, but the specific contents of the control processing in the main controller 1 and the specific contents of the control processing in the unit controller 17 are described later in detail.

As described above, the main controller 1 of the present embodiment does not directly control various controlled devices included in the recovery units 10A-10C.

The main controller 1 communicate to send instructions including a control guideline and a transit permission to the recovery mode to the unit controllers 17 provided in the recovery units 10A-10C. Therefore, even if the number of the recovery units 10A-10C increases, an increase in the processing load on the main controller 1 may not be increased. In addition, since there is no need to perform wiring for directly connecting the main controller 1 and the devices to be controlled in the recovery units 10A-10C, wiring work and wiring costs may be reduced. Furthermore, since the roles of the main controller 1 and the unit controller 17 are defined as described above, it is possible to easily add a new recovery unit in addition to the recovery units 10A-10C later or construct a new system with different numbers of the recovery units.

The plurality of recovery units 10A-10C shown in FIG. 1 separate carbon dioxide from the atmosphere and transfer the separated carbon dioxide to the CO2 recovery tank 3, respectively. The configuration of multiple recovery units 10A-10C is described in detail later.

The CO2 recovery tank 3 collects and stores carbon dioxide recovered by and transferred from the plurality of recovery units 10A-10C. The carbon dioxide recovery tank 3 accumulates recovered carbon dioxide. The CO2 sensor 2 measures a concentration and a flow rate of carbon dioxide flowing through a channel at predetermined time intervals when carbon dioxide is transferred from each of the plurality of recovery units 10A-10C to the CO2 recovery tank 3. A detected value of the CO2 sensor 2 is transmitted to the main controller 1. The main controller 1 calculates a recovery amount of carbon dioxide recovered in the CO2 recovery tank 3 from the recovery units 10A-10C from the concentration and the flow rate detected by the CO2 sensor 2.

The carbon dioxide recovery amount may be calculated by the CO2 sensor 2. In this case, the CO2 sensor 2 outputs the carbon dioxide recovery amount to the main controller 1. The concentration of the carbon dioxide flowing through the channel toward the CO2 recovery tank 3 is usually close to 100%. Therefore, a sensor that can only detect the flow rate of the carbon dioxide may be used as the CO2 sensor 2. Furthermore, the CO2 sensor 2 may output a detected value or the carbon dioxide recovery amount to the unit controllers 17 of the plurality of recovery units 10A-10C. Alternatively, the CO2 sensor 2 may be provided in each of the recovery units 10A-10C so as to output the detected value or the carbon dioxide recovery amount to the corresponding unit controller 17.

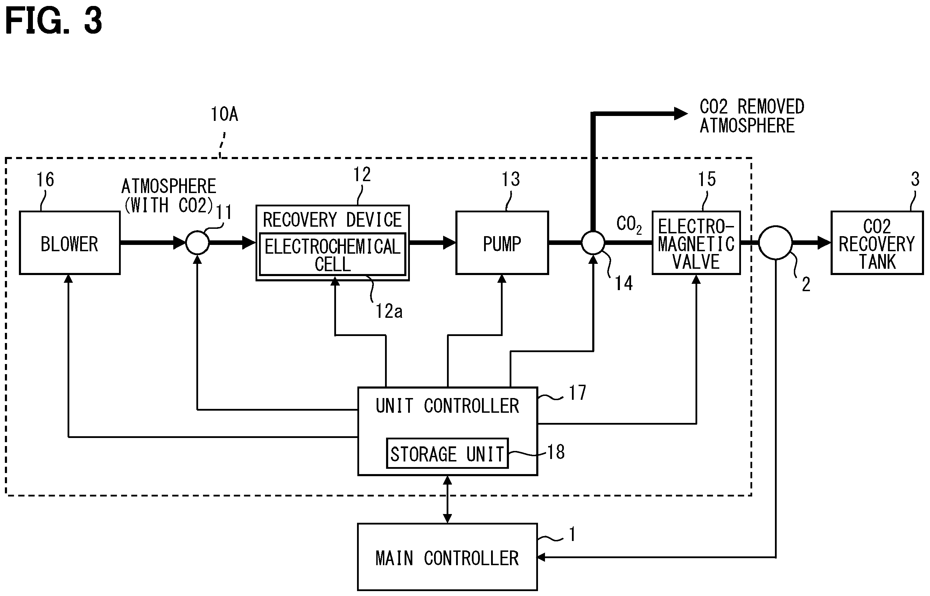

Next, the configuration of multiple recovery units 10A-10C is described with reference to FIG. 3. The plurality of recovery units 10A-10C all have the same configuration. Therefore, the recovery unit 10A is used as a representative example, and a configuration of the recovery unit 10A is described.

As shown in FIG. 3, the recovery unit 10A includes a channel on/off valve 11, a recovery device 12, a pump 13, a channel switching valve 14, an electromagnetic valve 15, a blower 16, and a unit controller 17.

The on/off state of the channel on/off valve 11 is controlled by the unit controller 17. If the channel on/off valve 11 is opened, a mixed gas containing carbon dioxide may be introduced into the recovery device 12 through a channel communicating the outside (atmosphere) and an inside of the recovery device 12.

On the other hand, if the channel on/off valve 11 is closed, the channel communicating the outside and the inside of the recovery device 12 is blocked, and the recovery device 12 is sealed from the outside. Note that the channel on/off valve 11 may be replaced by a shutter or the like that opens and closes an opening to the recovery device 12. The channel on/off valve 11 provides a channel on/off unit 11. The channel on/off valve 11 enables the housing to introduce the atmosphere by opening an inlet of the housing when the electrochemical cell 12a adsorbs carbon dioxide. The channel on/off valve 11 disables the housing to isolate from the atmosphere by closing the inlet of the housing when the electrochemical cell 12a desorbs carbon dioxide.

The blower 16 is activated by the unit controller 17 if the channel on/off valve 11 is opened, and sends a mixed gas containing carbon dioxide into the recovery device 12 through the channel communicating the outside and the inside of the recovery device 12. However, the blower 16 may be omitted. Alternatively, the pump 13 may also serve a function of the blower 16. That is, the unit controller 17 may be configured to drive the pump 13 if the channel on/off valve 11 is open, and suck the atmosphere containing carbon dioxide into the recovery device 12 from the outside through the channel.

The recovery device 12 includes an electrochemical cell 12a disposed inside a housing made of, for example, a metal. The electrochemical cell 12a may adsorb carbon dioxide by an electrochemical reaction to separate the carbon dioxide from the atmosphere, and desorb the adsorbed carbon dioxide to accumulate the desorbed carbon dioxide in the CO2 recovery tank 3 by the pump 13. The unit controller 17 may cause the electrochemical cell 12a to adsorb carbon dioxide by applying an adsorption potential to the electrochemical cell 12a. Further, the unit controller 17 may cause the electrochemical cell 12a to desorb the adsorbed carbon dioxide by applying a desorption potential to the electrochemical cell 12a.

The recovery device 12 has two openings. One of the openings is an introduction port for introducing the atmosphere containing carbon dioxide into the housing of the recovery device 12 from the outside. The other of the openings is a discharge port for discharging the atmosphere from which the carbon dioxide has been removed or the carbon dioxide desorbed from the electrochemical cell 12a. The above channel pipe communicating the outside and the inside of the recovery device 12 is connected to the introduction port, and a channel pipe provided with the pump 13 is connected to the discharge port. Note that the inside of the recovery device 12 is the same as the inside of the housing.

A plurality of electrochemical cells 12a are stacked and disposed in the housing of the recovery device 12. A stacking direction of the plurality of electrochemical cells 12a is a direction orthogonal to a flow direction of the atmosphere. Each electrochemical cell 12a is formed in a plate shape, and is disposed such that a plate surface intersects with the stacking direction of the cells. A predetermined gap is provided between the adjacent electrochemical cells 12a. A gap provided between the adjacent electrochemical cells 12a serves as a channel through which the atmosphere flows.

Each electrochemical cell 12a is configured by stacking, for example, a working electrode current collecting layer, a working electrode, a separator, a counter electrode, a counter electrode current collecting layer, and the like in the described order. The working electrode is a negative electrode, and the counter electrode paired with the working electrode is a positive electrode. By changing a potential difference to be applied between the working electrode and the counter electrode, electrons can be provided to the working electrode so that a carbon dioxide adsorbent of the working electrode is caused to adsorb carbon dioxide, or electrons can be released from the working electrode so that the carbon dioxide adsorbent is caused to desorb the adsorbed carbon dioxide.

The working electrode current collecting layer is made of a porous conductive material having pores through which the atmosphere containing carbon dioxide can pass. The working electrode current collecting layer only needs to have gas permeability and conductivity, and as a material for forming the working electrode current collecting layer, for example, a metal material or a carbonaceous material can be used.

The working electrode is formed of a material obtained by mixing the carbon dioxide adsorbent, a conductive substance, a binder, and the like. The carbon dioxide adsorbent has a property of adsorbing carbon dioxide by receiving electrons and desorbing the adsorbed carbon dioxide by releasing electrons. As the carbon dioxide adsorbent, for example, polyanthraquinone can be used. The conductive substance forms a conductive path to the carbon dioxide adsorbent.

As the conductive substance, for example, a carbon material, such as a carbon nanotube, carbon black, or graphene, can be used. The binder is for holding the carbon dioxide adsorbent and the conductive substance. As the binder, for example, a conductive resin can be used. The conductive resin may be, for example, an epoxy resin or a fluoropolymer, containing Ag or the like as a conductive filler. The fluoropolymer may be, for example, polytetrafluoroethylene (PTFE), or polyvinylidene fluoride (PVDF).

The counter electrode is formed of a material obtained by mixing an electroactive auxiliary material, a conductive substance, a binder, and the like. Since the conductive substance and the binder of the counter electrode are similar to the conductive substance and the binder of the working electrode, description thereof is omitted. The electroactive auxiliary material of the counter electrode is made of a material having an active substance serving as an electron donor. The electroactive auxiliary material of the counter electrode is an auxiliary electroactive species that exchanges electrons with the carbon dioxide adsorbent of the working electrode. As the electroactive auxiliary material, for example, a metal complex capable of exchanging electrons by changing the valence of a metal ion can be used. Examples of such metal complex include cyclopentadienyl metal complexes such as ferrocene, nickelocene and cobaltocene, and porphyrin metal complexes. Each of these metal complexes may be a polymer or a monomer. Similar to the working electrode current collecting layer, the counter electrode current collecting layer is formed of a conductive material such as a metal material or a carbonaceous material.

The separator is disposed between the working electrode and the counter electrode to separate the working electrode and the counter electrode. The separator is an insulating ion permeable membrane that prevents physical contact between the working electrode and the counter electrode to suppress an electrical short circuit, and causes ions to pass therethrough. As the separator, a cellulose membrane, a polymer, a composite material of a polymer and a ceramic, or the like can be used. In the electrochemical cell 12a, an electrolyte is provided across the working electrode and the counter electrode. As the electrolyte, for example, an ionic liquid can be used. The ionic liquid is salt of a liquid having non-volatility under normal temperature and pressure.

The pump 13 may suck a residual atmosphere left in the recovery device 12 from the recovery device 12 and discharge the atmosphere to the outside (i.e., scavenges the residual atmosphere in the recovery device 12). And, if the carbon dioxide adsorbed by the carbon dioxide adsorbent is desorbed, the pump 13 may suck the desorbed carbon dioxide from the recovery device 12 and discharge the carbon dioxide toward the CO2 recovery tank 3. The pump 13 is controlled by the unit controller 17. For example, the unit controller 17 controls the channel on/off valve 11 to shut off the channel that communicates the inside of the recovery device 12 with the outside, when the unit controller 17 controls the pump 13 to scavenge the residual air in the recovery device 12. Therefore, scavenging of a residual atmosphere in the recovery device 12 is performed by vacuum drawing by the pump 13. In addition, a subsequent discharge of the carbon dioxide to the CO2 recovery tank 3 is also performed in a state closer to a vacuum than the atmosphere.

The channel switching valve 14 is a three-way valve that switches the channel for a gas flowing through the channel on the downstream side of the pump 13.

The unit controller 17 controls switching of the channel by the channel switching valve 14. Specifically, if the atmosphere containing carbon dioxide is introduced into the recovery device 12 or if the residual atmosphere in the recovery device 12 is scavenged by the pump 13, the unit controller 17 controls the channel switching valve 14 such that the channel on the downstream side of the pump 13 communicates with the outside (atmosphere). As a result, the atmosphere from which carbon dioxide has been removed and the residual atmosphere in the recovery device 12 are released to the outside. On the other hand, if the pump 13 sucks the desorbed carbon dioxide from the recovery device 12 and discharges the carbon dioxide in a state where the carbon dioxide adsorbent of the electrochemical cell 12a desorbs the adsorbed carbon dioxide, the unit controller 17 controls the channel switching valve 14 such that the channel on the downstream side of the pump 13 communicates with a side to the CO2 recovery tank 3. As a result, the carbon dioxide recovered by the recovery device 12 can be transferred to the CO2 recovery tank 3 and accumulated in the CO2 recovery tank 3.

The electromagnetic valve 15 is provided in a channel between the channel switching valve 14 and the CO2 recovery tank 3, and is capable of switching between an on state and an off state of the channel. The electromagnetic valve 15 is controlled by the unit controller 17. The unit controller 17 controls the electromagnetic valve 15 to be in the on state when transferring carbon dioxide from the recovery unit 10A, i.e., a corresponding one of the recovery units, to the CO2 recovery tank 3, i.e., a common tank. On the other hand, when the unit controller 17 does not transfer carbon dioxide from the recovery unit 10A to the CO2 recovery tank 3, the electromagnetic valve 15 is controlled to be in the off state. As a result, it is possible to prevent the recovery unit 10A, i.e., the corresponding recovery unit, from affecting transferring of carbon dioxide from the recovery units 10B and 10C, i.e., the other recovery unit, to the CO2 recovery tank 3. Note that the on/off function of the electromagnetic valve 15 may be incorporated into the channel switching valve 14. That is, the channel switching valve 14 may be configured to be switchable between an on state of communication with a channel connected to the outside, an on state of communication with the channel connected to the CO2 recovery tank 3, or an off state of communication with neither channels, i.e., a blocking state.

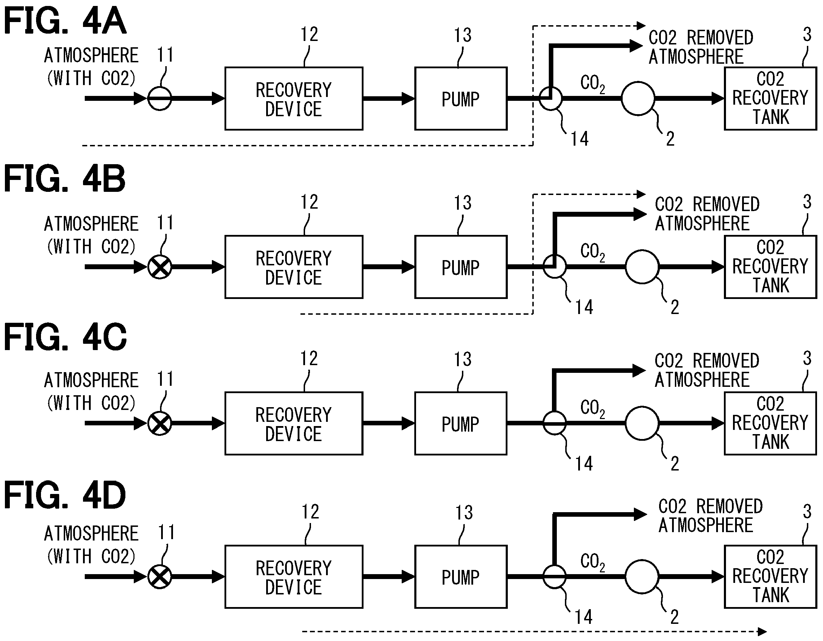

Here, a sequence performed in each one of the plurality of recovery units 10A-10C includes an absorbing stage to the electrochemical cell 12a to adsorb carbon dioxide contained in the atmosphere, a desorbing stage to desorb the adsorbed carbon dioxide from the electrochemical cell 12a, and a recovering stage, which may be performed simultaneously with the desorbing stage, to recover carbon dioxide in the CO2 recovery tank 3. The absorbing stage and the desorbing stage may be performed in each one of the plurality of recovery units and referred to as separate stages or parallel stages. However, the recovering stage in a common component of the CO2 recovery tank 3 and referred to as a common stage or a consolidated stage. Hereinafter, this sequence is explained with reference to FIG. 4. A series of control sequence includes an adsorption mode, a scavenging mode, a desorption mode, and a recovery mode.

As shown in FIG. 4A, in the adsorption mode, which is a first operation mode in the series of control sequence, the channel on/off valve 11 is opened to allow the introduction of the atmosphere containing carbon dioxide into the recovery device 12. If the blower 16 is provided, the blower 16 is activated and driven at a predetermined constant rotational speed so that a predetermined amount of the atmosphere is introduced into the recovery device 12. If the pump 13 also serves as the blower 16, by activating and driving a motor (not shown) at a predetermined rotational speed, the pump 13 is activated and driven to suck the atmosphere and send the atmosphere into the recovery device 12 from the outside. In this case, the pump 13 is driven only to suck the mixed gas from the outside, so that the energy required for the suction is less than that required for pump drive for the evacuation in the scavenging mode or the recovery mode to be described later.

In the adsorption mode, the adsorption potential is applied between the working electrode and the counter electrode of the electrochemical cell 12a of the collector device 12 so that the carbon dioxide adsorbent of the working electrode can adsorb carbon dioxide. This adsorption potential is a predetermined constant potential. As shown in FIG. 4A, in the adsorption mode, the channel switching valve 14 is controlled so that the channel on the downstream side of the pump 13 communicates with the outside.

As shown by a dotted arrow in FIG. 4A, in the adsorption mode, the atmosphere containing carbon dioxide passes through the channel on/off valve 11 and enters the recovery device 12, by the above described control of the channel on/off valve 11, the electrochemical cell 12a in the recovery device 12, the channel switching valve 14, and the like. The carbon dioxide contained in the atmosphere entering the recovery device 12 is adsorbed by the plurality of electrochemical cells 12a.

As a result, carbon dioxide is removed from the atmosphere. The atmosphere, from which the carbon dioxide has been removed, passes through the pump 13, is guided to a channel leading toward the outside at the channel switching valve 14, and is discharged to the outside through the channel.

As shown in FIG. 4B, in the scavenging mode, which is a second operation mode in the series of control sequence, the channel on/off valve 11 is closed. If the blower 16 is provided, the blower 16 is turned off. The adsorption potential applied between the working electrode and the counter electrode of the electrochemical cell 12a of the recovery device 12 is maintained. The communication between the channel on the downstream side of the pump 13 and the outside by the channel switching valve 14 is also maintained.

In the scavenging mode, driving of the pump 13 is started. As described above, the channel on/off valve 11 is closed, so that the recovery device 12 is in a sealed state on the upstream side of the pump 13. If the pump 13 is activated in this state, the residual atmosphere left in the sealed recovery device 12, from which the carbon dioxide has been removed, is sucked from the inside of the recovery device 12 and discharged to the outside. As a result, the residual atmosphere in the recovery device 12 can be scavenged.

Since the recovery device 12 on the upstream side of the pump 13 is sealed, the scavenging of the residual atmosphere in the recovery device 12 is performed by evacuation by the pump 13. Therefore, for example, in the case where the pump 13 also serves as the blower 16, the activation of the pump 13 is continued, but the activation output thereof is made higher than that in an intake mode by the start of the scavenging mode.

As shown by a dotted arrow in FIG. 4B, in the scavenging mode, the residual atmosphere in the recovery device 12, from which the carbon dioxide has been removed, passes through the pump 13, is guided to the channel leading toward the outside at the channel switching valve 14, and is discharged to the outside through the channel, by the above described control of the channel on/off valve 11, the electrochemical cell 12a of the recovery device 12, the pump 13, and the channel switching valve 14.

As shown in FIG. 4C, in the desorption mode, which is a third operation mode in the series of control sequence, the channel on/off valve 11 is kept closed. The channel switching valve 14 communicates a channel downstream of the pump 13 with a channel connected to the CO2 recovery tank 3. The driving of the pump 13 is stopped. Therefore, as shown in FIG. 4C, a forced gas flow by the pump 13 does not occur. The desorption potential, at which the carbon dioxide adsorbed by the carbon dioxide adsorbent of the working electrode can be desorbed by releasing electrons from the working electrode, is applied between the working electrode and the counter electrode of the electrochemical cell 12a. This desorption potential is a predetermined constant potential. Thus, in the desorption mode, since the desorption potential is applied to the electrochemical cell 12a while the pump 13 is stopped, it is possible to promote desorption of carbon dioxide from the electrochemical cell 12a while avoiding energy consumption by the pump 13.

As shown in FIG. 4D, in the recovery mode, which is a final operation mode in the series of control sequence, the channel on/off valve 11 is kept closed. The driving of the pump 13 is restarted. In addition, the pump 13 is driven by the drive output equal to or greater than that in the scavenging mode in order to perform sucking the carbon dioxide desorbed from the adsorbent of the electrochemical cell 12a in a state closer to a vacuum than the atmosphere. Also, in the recovery mode, the desorption potential to the electrochemical cell 12a is continuously applied. As shown in FIG. 4D, in the recovery mode, the channel switching valve 14 keeps an on state which communicate the channel downstream of the pump 13 with the channel leading to the CO2 recovery tank 3.

As shown by a dotted arrow in FIG. 4D, in the recovery mode, the carbon dioxide desorbed from the absorbent of the electrochemical cell 12a passes through the pump 13, is guided to a channel leading toward the CO2 recovery tank 3 by the channel switching valve 14, and is accumulated in the CO2 recovery tank 3 through the channel, by the above described control of the channel on/off valve 11, the electrochemical cell 12a of the recovery device 12, the pump 13, and the channel switching valve 14. At this time, the concentration and the flow rate of the carbon dioxide flowing through the channel toward the CO2 recovery tank 3 are measured by the CO2 sensor 2.

Note that the illustration of the electromagnetic valve 15 is omitted in FIG. 4A, FIG. 4B, FIG.4C and FIG. 4D. The electromagnetic valve 15 is kept closed during the adsorption mode, the scavenging mode, and the desorption modes shown in FIG. 4A, FIG. 4B and FIG. 4C. When the desorption mode ends, the unit controller 17 transmits to the main controller 1 a notification requesting transition to the recovery mode. Hereinafter, the notification requesting transition to the recovery mode may be referred to as a recovery transition request notice. The main controller 1 arbitrates at least two recovery transition request notices from the collection units 10A-10C, and then sends back a transit permission notice to the recovery mode to the unit controllers 17 of the collection units 10A-10C.

Hereinafter a transit permission notice to the recovery mode is also referred to as a recovery transition permission notice. The unit controller 17 waits to transit to the recovery mode until receiving a recovery transition permission notice from the main controller 1 even after the desorption mode ends. Upon receipt of the recovery transition permission notice from the main controller 1, the unit controller 17 opens the electromagnetic valve 15 to start the recovery mode.

In the above example, the desorption mode and the recovery mode are separated, but it is also possible to simultaneously execute the desorption mode and the recovery mode. That is, the desorption mode and the recovery mode can be performed simultaneously by starting the application of the desorption potential to the electrochemical cell 12a and simultaneously starting the driving of the pump 13. In this case, when the scavenging mode ends, the unit controller 17 may send a notice requesting a permission to transit to the desorption/recovery mode to the main controller 1. Then, when the unit controller 17 receives from the main controller 1 a transit permission notice to the desorption/recovery mode, the unit controller 17 may start the desorption/recovery mode.

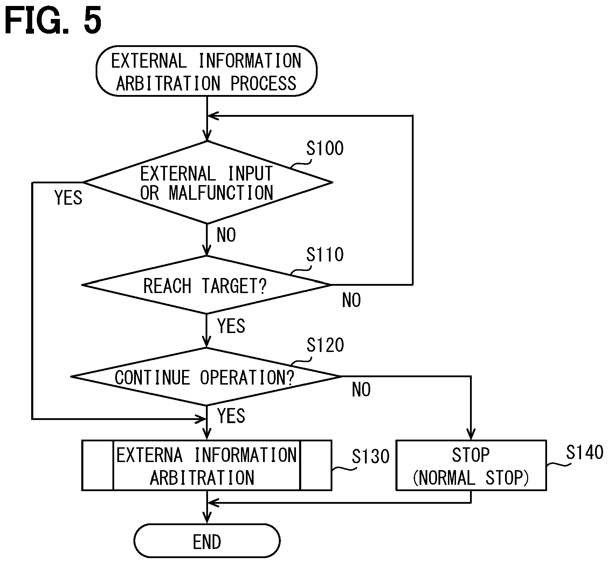

Next, each function of the main controller 1 is described with reference to the drawings. The flowcharts in FIG. 5, FIG. 6, FIG. 7, and FIG. 8 show processing executed by the main controller 1 to function as the external information arbitration unit 1a. The external information arbitration unit 1a is described with reference to the flowcharts of FIG. 5, FIG. 6, FIG. 7, and FIG. 8. Processing shown in the flowchart of FIG. 5 is executed, for example, at predetermined time intervals.

In a first step S100, the main controller 1 determines whether external information has been input from any one of the renewable energy system 4, the user interface 5, and the external server 6, or determines whether any malfunction has occurred in the carbon dioxide recovery system 100. The main controller 1 monitors malfunction operation of various controlled devices in the recovery units 10A-10C based on communications with the unit controller 17, and malfunction in which the recovery units 10A-10C cannot normally transfer carbon dioxide based on a detected value of the CO2 sensor 2. If an affirmative determination is made in the step S100, the main controller 1 proceeds to a process of a step S130. On the other hand, if a negative determination is made in the step S100, the main controller 1 proceeds to a process of a step S110.

In the step S110, if a target value of a carbon dioxide recovery amount or a target value of an energy consumption for carbon dioxide recovery is set, it is determined whether an actual carbon dioxide recovery amount or an actual energy consumption has reached the target value. For the target value of the carbon dioxide recovery amount, for example, the user may set an arbitrary recovery amount or set a recovery amount corresponding to a capacity of the CO2 recovery tank 3. The target value of the energy consumption is set, for example, to an energy amount equivalent to an amount of electric power that can be used by the carbon dioxide recovery system 100 among the electric power generated by the renewable energy system 4. In the process of the step S110, if it is determined that the actual carbon dioxide recovery amount or the actual energy consumption has not reached the target value, or if the target value has not been set, the main controller 1 returns to the process of the step S100. On the other hand, if determining that the actual carbon dioxide recovery amount or the actual energy consumption has reached the target value, the main controller 1 proceeds to the process of a step S120.

In the step S120, the main controller 1 determines whether or not the carbon dioxide recovery system 100 should continue to operate. For example, the main controller 1 may determine that the operation of the carbon dioxide recovery system 100 should be continued if the user is notified that the target value has been reached and the user instructs to continue the operation. Alternatively, if there is still enough vacancy on a recovery amount in the CO2 recovery tank 3 or there is still usable energy remaining, the main controller 1 may determine to continue the operation of the carbon dioxide recovery system 100. Furthermore, if the weather is expected to deteriorate in the future, there is a high possibility that the carbon dioxide recovery system 100 cannot be operated during the deterioration of the weather, therefore, it is possible to determine that the operation of the carbon dioxide recovery system 100 is continued during until the weather deteriorates. If it is determined that the carbon dioxide recovery system 100 is continuously operated, the main controller 1 proceeds to the process of the step S130. On the other hand, if it is determined that the carbon dioxide recovery system 100 is not continuously operated, the main controller 1 proceeds to a process of a step S140.

At the step S130, the main controller 1 executes external information arbitration processing. The external information arbitration processing is described in detail later. At the step S140, the main controller 1 stops the operation of the carbon dioxide recovery system 100. Specifically, the main controller 1 instructs a normally stop as a control guideline to the unit controller 17 of the recovery units 10A-10C. The normal stop means stopping the operation of each of the recovery units 10A-10C after finishing the control for carbon dioxide recovery being executed in each of the recovery units 10A-10C. The control for carbon dioxide recovery is a series of control sequence.

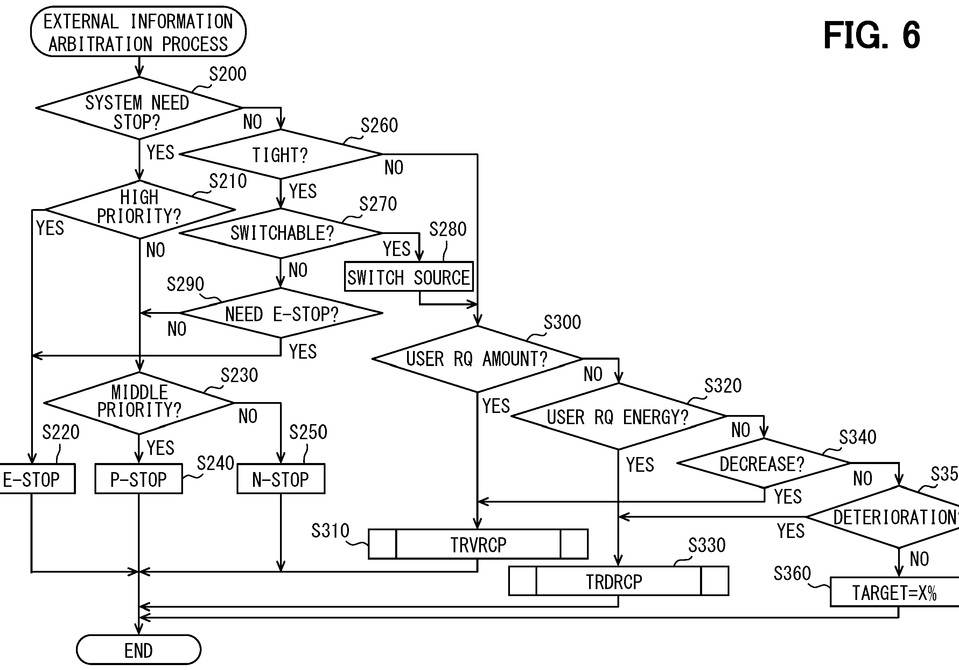

Next, the external information arbitration processing in the step S130 of the flowchart of FIG. 5 is described in detail with reference to the flowchart of FIG. 6.

First, in a step S200, the main controller 1 determines whether or not it is necessary to stop the operation of the carbon dioxide recovery system 100 based on acquired external information. For example, if an earthquake, tsunami, typhoon, tornado, heavy rain, strong wind, etc. is predicted, if the user requests to stop the system, or if a malfunction in the carbon dioxide recovery system 100 is detected, the main controller 1 may determine that the operation of the carbon dioxide recovery system 100 needs to be stopped. In the process of the step S200, if it is determined that the operation of the carbon dioxide recovery system 100 needs to be stopped, the main controller 1 proceeds to a process of a step S210. On the other hand, if it is determined that it is not necessary to stop the operation of the carbon dioxide recovery system 100, the main controller 1 proceeds to a process of a step S260.

In the step S210, the main controller 1 determines whether it is necessary to stop the operation of the carbon dioxide recovery system 100 immediately due to a high stop priority when stopping the operation of the carbon dioxide recovery system 100. For example, the main controller 1 may be determined that it is necessary to immediately stop the operation of the carbon dioxide recovery system 100 if a certain case is occurred. The certain case may include a case of receiving external information about an occurrence of a disaster such as an earthquake or tsunami, a case of receiving a system emergency shutdown request from the user, or a case of detecting a serious malfunction occurred in the carbon dioxide recovery system 100. In the process of the step S210, if it is determined that the operation of the carbon dioxide recovery system 100 needs to be stopped immediately, the main controller 1 proceeds to a process of a step S220. On the other hand, if it is determined that the carbon dioxide recovery system 100 is not necessary to be stopped immediately, the main controller 1 proceeds to a process of a step S230.

In the step S220, an emergency stop (E-STOP) is determined as a control target. This control target is used when the control guideline setting section 1b of the main controller 1 sets the control guideline to be provided to the unit controller 17 of each recovery unit 10A-10C.

In the step S230, the main controller 1 determines whether it is necessary to stop the operation of the carbon dioxide recovery system 100 in a relatively quick manner due to a middle of the stop priority when stopping the operation of the carbon dioxide recovery system 100. For example, the main controller 1 may determine that the operation of the carbon dioxide recovery system 100 needs to be stopped in a relatively quick manner, if the main controller 1 obtains external information such as an approach of a typhoon or tornado, prediction of heavy rain, or detects that a relatively serious malfunction has occurred in the carbon dioxide recovery system 100. Conversely, the main controller 1 may determine that the operation of the carbon dioxide recovery system 100 needs to be stopped, but the operation of the carbon dioxide recovery system 100 does not need to be stopped in a relatively quick manner if the main controller 1 receives the stop request for the user or detects that a minor malfunction has occurred in the carbon dioxide recovery system 100. In the process of the step S230, if it is determined that the operation of the carbon dioxide recovery system 100 needs to be stopped in a relatively quick manner, the main controller 1 proceeds to a process of a step S240. On the other hand, if it is determined that the carbon dioxide recovery system 100 is not necessary to be stopped in a relatively quick manner, the main controller 1 proceeds to a process of a step S250.

In the step S240, a protective stop (P-STOP) is determined as a control target. A difference between the emergency stop and the protective stop may be a delay.

For example, the emergency stop is a command to the unit controller 17 to stop each of the recovery unit 10A-10C immediately regardless of condition of the carbon dioxide recovery system 100. On the other hand, the protection stop is a command to the unit controller 17 to stop each of the recovery unit 10A-10C after at least one protective procedure is performed. The protective procedure may include procedure to protect the carbon dioxide recovery system 100 itself, procedure to keep the recovered carbon dioxide. The protective procedure may include actual operations of the component, such as a close operation of the channel on/off valve 11, a communicating operation to the outside of the channel switching valve 14, and a close operation of the electromagnetic valve 15. Further, in the step S250, a normal stop (N-STOP) is determined as the control target.

The normal stop is a command to stop the operation of the recovery units 10A-10C after the unit controller 17 finishes the control (a series of control sequence) for carbon dioxide recovery being executed in each of the recovery unit 10A-10C.

In a step S260, the main controller 1 determines whether or not an operating electric power of the carbon dioxide recovery system 100 is in a tight situation due to a lowering of an amount of the electric power that can be supplied from the renewable energy system 4 to the carbon dioxide recovery system 10 based on an amount of the electric power acquired from the renewable energy system 4. If determining that the operating electric power is tight, the main controller 1 proceeds to a process of a step S270. On the other hand, if it is determined that the operating electric power is not tight, the main controller 1 proceeds to a step S300.

In the step S270, the main controller 1 determines whether or not supply sources of the operating electric power to the carbon dioxide recovery system 100 can be switched. Specifically, the main controller 1 determines whether or not it is possible to switch the supply source of the operating electric power to the carbon dioxide recovery system 100 from the renewable energy system 4 to a commercial power source. If it is determined that the supply source of the operating electric power can be switched due to there is no power failure or the like on the commercial power source, the main controller 1 proceeds to a step S280 and switches the supply source of the operating electric power. On the other hand, if it is determined that the supply source of the operating electric power cannot be switched, the main controller 1 proceeds to a process of a step S290.

In the step S290, the main controller 1 determines whether or not an emergency stop is necessary due to it is in a situation that the operating electric power is so tight. If it is determined that an emergency stop is necessary, the main controller 1 proceeds to the process of the step S220. On the other hand, if it is determined that the emergency stop is not necessary, the main controller 1 proceeds to the process of the step S230.

In a step S300, based on information from the user interface 5, the main controller 1 determines whether or not a user request to improve the carbon dioxide recovery amount has been accepted based on information from the user interface 5 in order to prioritize the carbon dioxide recovery amount over an energy consumption (USER RQ AMOUNT?). If it is determined that the user request to improve the carbon dioxide recovery amount is accepted, the main controller 1 proceeds to a process of a step S310. If it is determined that the user request to improve the carbon dioxide recovery amount is not accepted, the main controller 1 proceeds to a process of a step S320.

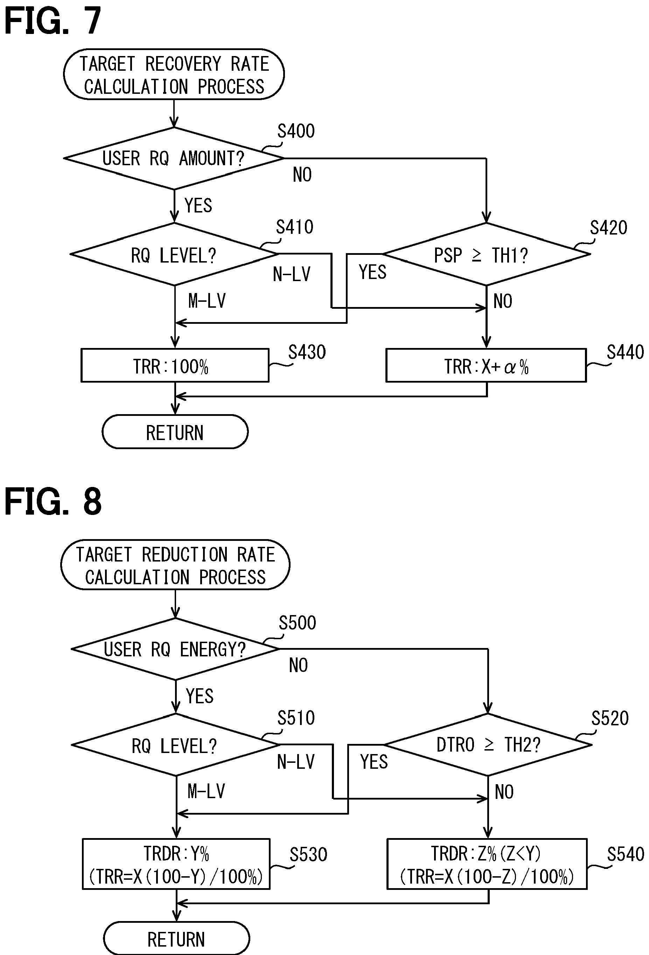

In the step S310, a target recovery rate calculation processing (TRVRCP) is executed. A details of the target recovery rate calculation process are shown in the flowchart of FIG. 7. The specific contents of the target recovery rate calculation process is described below with reference to the flowchart of FIG. 7.

First, in a step S400, it is determined whether or not a user request to improve the carbon dioxide recovery amount has been received (USER RQ AMOUNT?).

As is described later, in the flowchart of FIG. 6, the target recovery rate calculation processing (TRVRCP) of the step S310 is also executed if it is expected that the carbon dioxide recovery amount decreases in the future. The determination process in the step S400 is performed to determine whether the target recovery rate calculation process has been started by a user request or by predicting the future decrease in the carbon dioxide recovery amount. If the target recovery rate calculation process is started by the user request, the main controller 1 proceeds to a process of a step S410. On the other hand, if the target recovery rate calculation process is started by predicting the future decrease in the carbon dioxide recovery amount, the main controller 1 proceeds to a process of a step S420.

In the step S410, the main controller 1 determines a performance level requested by the user with respect to the improvement of the carbon dioxide recovery amount (RQ LEVEL?). The user interface 5 is configured to be able to input user requests for at least two levels of performance (for example, the maximum level and a normal level) for improving the amount of carbon dioxide recovered. The main controller 1 can recognize, through communication with the user interface 5, the performance level requested by the user with respect to the improvement of the carbon dioxide recovery amount. If the performance level requested by the user is the maximum level (M-LV), the main controller 1 proceeds to a step S430.

If the performance level requested by the user is a normal level (N-LV), the main controller 1 proceeds to a step S440.

In the step S420, if a certain amount of decrease in the carbon dioxide recovery amount is predicted in the future due to needs to stop the carbon dioxide recovery system 100 due to future deterioration of the weather (rain, snow, etc.) or maintenance, etc., the main controller 1 evaluates a magnitude of an impact of a stoppage by a predicted stop period. For example, in the step S420 the main controller 1 determines whether the predicted stop period PSP is equal to or greater than a reference threshold value TH3 (PSP≥TH3). That is, the main controller 1 determines whether or not the predicted stop period of the carbon dioxide recovery system 100 is equal to or greater than the reference threshold value TH3. For example, if the predicted stop period is three days or more during a period of one week from the present, it may be determined that the predicted stop period is equal to or greater than the reference threshold value. In addition, if the predicted stop period covers 50% or more of a period of one day, half a day, or a predetermined period of time from the present, it may be determined that the predicted stop period is equal to or greater than the reference threshold value.

On the other hand, if it is determined that the predicted stop period PSP is equal to or greater than the reference threshold value TH3, the main controller 1 proceeds to a process of a step S430. On the other hand, if it is determined that the predicted stop period PSP is less than the reference threshold value TH3, the main controller 1 proceeds to the process of the step S440.

In the step S430, the main controller 1 determines a target recovery rate (TRR) of 100% as a control target (TRR:100%). The target recovery rate of 100% means situation where the unit controllers 17 are commanded to adsorb carbon dioxide by fully using the carbon dioxide adsorption performance of the electrochemical cell 12a in each of the recovery units 10A-10C and to control the chemical cell 12a, the pump 13, and the like in a proper manner so as to recover all carbon dioxide adsorbed. However, if the electrochemical cell 12a adsorb carbon dioxide with the maximum level of the carbon dioxide adsorption performance and the electrochemical cell 12a, the pump 13, etc. are controlled to recover all the adsorbed carbon dioxide, the energy consumed in each of the recovery units 10A-10C also increases.

In the step S440, the main controller 1 determines a target recovery rate (TRR) of X+α% as a control target (TRR:X+α%). As described above, with a recovery target rate of 100%, the amount of carbon dioxide that can be recovered increases, but there is a possibility that the energy consumption in each of the recovery units 10A-10C will increase even more. Therefore, as is described later, the main controller 1 determines the target recovery ratio to X%, which is less than 100% (e.g., 70%-80%), by considering a proper balance of the carbon dioxide recovery amount and the energy consumption in a normal operation when there is no requirement to improve the carbon dioxide recovery amount and no requirement to reduce the energy consumption. In the step S440, the target recovery rate X+α%, which is slightly higher than the target recovery rate X% of the normal operation, is determined as the control target.

In the above example, the target recovery rate higher than the target recovery rate X% of the normal operation is set in two stages, but it is possible to configure that the target recovery rate higher than the target recovery rate of the normal operation is set in more stages. Conversely, the target recovery rate higher than the target recovery rate for the normal operation may be one level.

Returning again to the flowchart of FIG. 6, the description is continued. In the step S320, the main controller 1 determines whether or not a user request to reduce energy consumption by prioritizing reduction of energy consumption over the amount of carbon dioxide recovered has been received (USER RQ ENERGY?).

On the other hand, if it is determined that the user request to reduce energy consumption has not been received, the main controller 1 proceeds to a process of a step S330. On the other hand, if it is determined that the user request to reduce energy consumption has not been received, the main controller 1 proceeds to a process of a step S340.

In the step S330, a target reduction rate calculation process (TRDRCP) is executed. A details of the target reduction rate calculation process are shown in the flowchart of FIG. 8. The specific contents of the target reduction rate calculation process is described below with reference to the flowchart of FIG. 8.

First, in a step S500, it is determined whether or not a user request to reduce energy consumption has been received. As is described later, in the flowchart of FIG. 6, even if the ratio of the electrochemical cells 12a whose carbon dioxide adsorption performance is degraded in the recovery unit group 10 is large, the target reduction rate calculation process (TRDRCP) in the step S330 is performed.

The determination process in the step S500 is performed to determine whether the target reduction rate calculation process has been started by a user request or by an increase in a ratio of the electrochemical cells 12a whose carbon dioxide adsorption performance has deteriorated. If the target reduction rate calculation process is started by the user request, the main controller 1 proceeds to a process of a step S510. On the other hand, if the target reduction rate calculation process is started by increasing a ratio of the electrochemical cells 12a whose carbon dioxide adsorption performance is degraded, the main controller 1 proceeds to a process of a step S520.

In the step S510, the main controller 1 determines a performance level desired by the user with respect to a reduction of energy consumption (RQ LEVEL?). The user interface 5 is configured to be able to input user requests for at least two levels of performance (for example, the maximum level and a normal level) for reducing energy consumption. The main controller 1 can recognize, through communication with the user interface 5, the performance level requested by the user with respect to the reduction of energy consumption. If the performance level requested by the user is the maximum level (M-LV), the main controller 1 proceeds to a step S530. On the other hand, if the performance level requested by the user is a normal level (N-LV), the main controller 1 proceeds to a step S540.

In the step S520, the main controller 1 determines that whether or not the deterioration of the carbon dioxide adsorption performance of the electrochemical cells 12a of the recovery units 10A-10C progresses due to aged deterioration, etc., and the deterioration DTRO of the carbon dioxide adsorption performance of the electrochemical cells 12a as a whole is equal to or greater than a reference threshold value TH2 (DTRO≥TH2). The deterioration of the carbon dioxide adsorption performance of the electrochemical cell 12a may be calculated as a ratio of the current total carbon dioxide recovery amount to an initial total carbon dioxide recovery amount. Both amounts may be obtained as the sum of the carbon dioxide recovery amounts of all the recovery units 10A-10C when the recovery units 10A-10C are controlled according to the target recovery rate of the normal operation. That is, a deterioration of a carbon dioxide adsorption performance of the electrochemical cell 12a can be calculated based on a total amount of carbon dioxide recovered by each of the plurality of recovery units 10A-10C.

Alternatively, a deterioration of a carbon dioxide adsorption performance of the electrochemical cell 12a may be determined based on a comparison result between a unit amount energy calculated and a reference energy predetermined.

The unit amount energy may be calculated as an energy needed to recover a unit amount of carbon dioxide. The unit amount energy may be calculated as an energy consumed in whole system. The unit amount energy may be calculated based on a total amount of carbon dioxide recovered by the plurality of the recovery units 10A-10C and a total amount of energy consumed by the plurality of the recovery units 10A-10C.

In this embodiment, the main controller 1 is configured to calculate a degree of decrease in a carbon dioxide recovery amount of an entire system based on at least a total amount of the carbon dioxide recovery amount by each of the plurality of the recovery units. The main controller 1 is configured to provide the unit controller with the control guideline indicating reduction of energy consumption if the degree of decrease in the carbon dioxide recovery amount of the entire system exceeds a predetermined threshold. The main controller 1 is configured to calculate a unit amount energy that is required to recover a predetermined unit amount of carbon dioxide by an entire system, as an index indicative of a deterioration degree of the carbon dioxide recovery amount of an entire system. The unit amount energy may be calculated based on a total amount of carbon dioxide recovered by the plurality of the recovery units 10A-10C and a total amount of energy consumed by the plurality of the recovery units 10A-10C. The main controller 1 may be configured to assume, if the unit amount energy that is calculated exceeds a predetermined reference energy, that a lowering degree of the carbon dioxide recovery amount of the entire system exceeds a predetermined threshold. This is because the amount of energy required to recover a predetermined unit amount of carbon dioxide increases as the carbon dioxide adsorption performance of the electrochemical cells 12a of the recovery units 10A-10C deteriorates.

If it is determined in the step S520 that the deterioration DTRO of the carbon dioxide adsorption performance of the electrochemical cells 12a is equal to or greater than a reference threshold value TH2, the main controller 1 proceeds to a step S530. On the other hand, if it is determined that the predicted stop period PSP is less than the reference threshold value TH3, the main controller 1 proceeds to the process of the step S540.

In the step S530, the main controller 1 determines a target reduction rate (TRDR) of Y% as a control target (TRDR: Y%) (TRR=X(100-Y)/100%). The target reduction rate Y% means that an energy amount consumed when each of the recovery unit 10A-10C is controlled according to the target recovery rate X of the normal operation is reduced Y%. Therefore, assuming that the energy amount and the carbon dioxide recovery amount are proportional, the target recovery rate is expressed as the target recovery rate=X(100-Y)/100. On the other hand, in the step S540, the main controller 1 determines a target reduction rate (TRDR) of Z% as a control target (TRDR: Z%) (Z<Y) (TRR=X(100-Z)/100%). The target reduction rate Z% is smaller than the target reduction rate Y%. That is, in the step S540, a reduction degree of energy consumption is smaller than that in the step S530. In this case, the target recovery rate is expressed as the target recovery rate=X(100-Z)/100.

In the example described above, the target reduction rate of energy consumption in the normal operation is set in two stages, but the target reduction rate may be set in more stages. Conversely, the target reduction rate for reducing energy consumption during the normal operation may be one level.

Returning again to the flowchart of FIG. 6, the description is continued. In the step S340, the main controller 1 determine whether or not a decrease in the carbon dioxide recovery amount in the future is predicted due to a needs to stop the carbon dioxide recovery system 100 due to future deterioration of the weather (rain, snow, etc.) or maintenance, etc., (DECREASE?). On the other hand, if it is determined that the carbon dioxide recovery amount decreases in the future, the main controller 1 proceeds to the process of the step S310. On the other hand, if it is determined that the carbon dioxide recovery amount is not decrease in the future, the main controller 1 proceeds to a process of a step S350.

In the step S350, the main controller 1 determines whether or not deterioration of the carbon dioxide adsorption performance of the electrochemical cells 12a of each of the recovery units 10A-10C has progressed due to aging deterioration or the like (DETERIORATION?). Whether or not the carbon dioxide adsorption performance of the electrochemical cells 12a of each one of the recovery units 10A-10C has progressed may be determined, for example, based on a ratio between a total amount of recovery amount of carbon dioxide of all of the recovery units 10A-10C at the beginning of the usage and a total amount of recovery amount of carbon dioxide of all of the recovery units 10A-10C at the present, or the unit amount energy required for recovering a predetermined unit amount of carbon dioxide for a whole of the system. If it is determined that the deterioration of the carbon dioxide adsorption performance of the electrochemical cells 12a of each of the recovery units 10A-10C has progressed, the main controller 1 proceeds to a process of the step S330. On the other hand, if it is determined that the deterioration of the carbon dioxide adsorption performance of the electrochemical cells 12a of each of the recovery units 10A-10C has not progressed, the main controller 1 proceeds to a process of a step S360.

In the step S360, the main controller 1 determines a target recovery rate X% corresponding to the normal operation as the control target (TARGET=X%), since there is no user request to improve the carbon dioxide recovery amount, and no user request to reduce the energy consumption, and there is no special situation to stop the system, to improve the carbon dioxide recovery amount, and to reduce the energy consumption.

As described above, the external information arbitration unit 1a arbitrates information (external information) acquired from each of the renewable energy system 4, the user interface 5, and the external server 6 according to the degree of importance. That is, the information required to stop the carbon dioxide recovery system 100 is handled as the most important external information, and it is first determined whether or not such external information has been acquired. Next, it is determined whether a user request to give priority to the recovery amount or a user request to reduce energy consumption has been received. After that, an external environment and a system condition of the carbon dioxide recovery system 100 are determined. In this manner, the external information arbitration unit 1a selects the external information for determining the control guideline in order of priority. Based on the selected external information, the external information arbitration unit 1a determines a control target to be used when setting a control guideline.

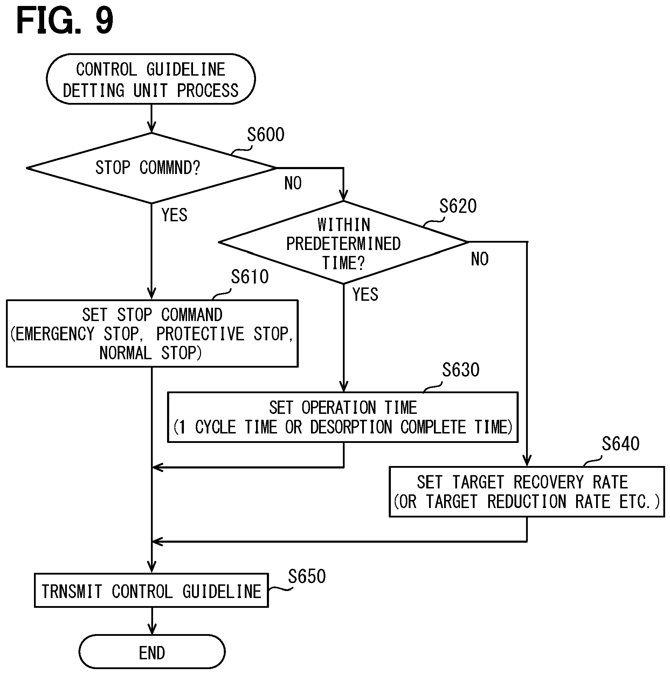

Next, processing executed by the main controller 1 to function as the control guideline setting unit 1b is described with reference to the flowchart of FIG. 9. The processing shown in the flowchart of FIG. 9 is executed, for example, at predetermined time intervals.

In a first step S600, the main controller 1 determines that the carbon dioxide recovery system 100 is stopped as a control target in either one of the step S140 of the flowchart of FIG. 5, the step S220, the step S240, or the step S250 of the flowchart of FIG. 6 and determines whether or not it is necessary to command the unit controllers 17A-17C of the recovery units 10A-10C to stop the system (STOP COMMAND?). If it is determined that it is necessary to command the system to stop, the main controller 1 proceeds to a process of a step S610. If it is determined that it is not necessary to command the system to stop, the main controller 1 proceeds to a process of a step S620.

At the step S610, the main controller 1 sets a stop command as a control guideline (SET STOP COMMAND). In the step S220 of the flowchart of FIG. 6, if the emergency stop is determined as the control target, the emergency stop command is set as the stop command. In the step S240 of the flowchart of FIG. 6, if the protective stop is determined as the control target, the protective stop command is set as the stop command. Further, if the normal stop is determined as the control target in the step S140 of the flowchart of FIG. 5 or in the step S250 of the flowchart of FIG. 6, the normal stop command is set as the stop command. In the step S620, the main controller 1 determines whether or not the scheduled stop time of the carbon dioxide recovery system 100 is predetermined, and determine whether or not a remaining time until the scheduled stop time is within a predetermined time (WITHIN PREDETERMINED TIME?). If it is determined that the predetermined time has elapsed until the scheduled stop time, the main controller 1 proceeds to a process of a step S630. On the other hand, if it is determined that the predetermined time has not yet elapsed until the scheduled stop time, the main controller 1 proceeds to a process of a step S640.

At the step S630, the main controller 1 sets an operation time as a control guideline (SET OPERATION TIME). Specifically, the main controller 1 sets a time at which each of the recovery unit 10A-10C should be able to transfer carbon dioxide as the operation time. The time at which each of the recovery unit 10A-10C should be able to transfer carbon dioxide may be the same time or different time for each of the recovery unit 10A-10C. If the same time is set as the time at which each of the recovery units 10A-10C should be able to transfer carbon dioxide, the recovery units 10A-10C should be able to recover carbon dioxide from each of the recovery unit 10A-10C before the scheduled stop time. If different times are set as the scheduled times at which the recovery units 10A-10C should be able to transfer carbon dioxide, the scheduled times are set so that the carbon dioxide recovery from the recovery units 10A-10C with the latest time should be completed by the scheduled stop time. Thereafter, each of the recovery unit 10A-10C ceases operation for carbon dioxide recovery.

Alternatively, the main controller 1 may set, as the operation time, the cycle time spent in the cycle from adsorption to transferring carbon dioxide in each of the recovery units 10A-10C. This is because even if the cycle time is set as the operation time, the operation of each of the recovery unit 10A-10C can be stopped by the scheduled stop time. In other words, in the case that a scheduled stop time of the carbon dioxide recovery system is predetermined, and a predetermined time remains until the scheduled stop time, the main controller 1 is configured to provide the unit controllers 17A-17C with the control guideline relating to the operation time. The control guideline relating to the operation time may be time at which the recovery device 12 should be ready to transfer carbon dioxide to the CO2 recovery tank 3 or cycle time which the recovery device 12 can spend to perform a cycle from an adsorption to a transfer of carbon dioxide. In step S640, the main controller 1 sets a target recovery rate or target suppression rate, as a control guideline, which are set as the control target in any of the steps S310, S330, and S360 of the flowchart of FIG. 6 (SET TARGET RECOVERY RATE).

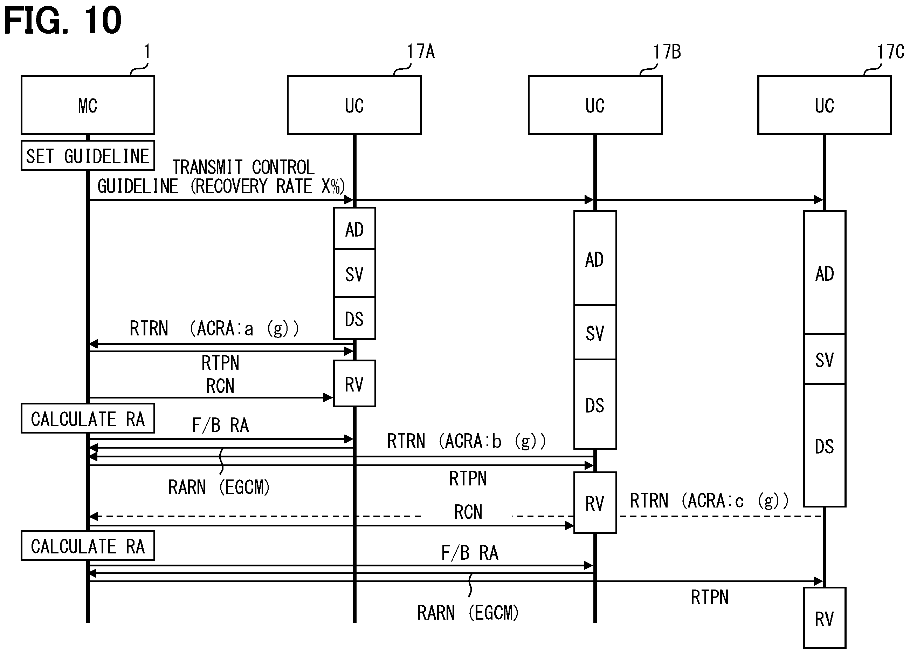

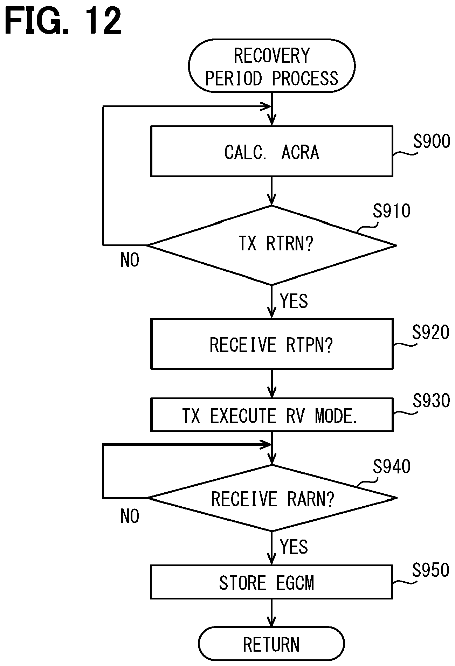

In a step S650, the main controller 1 transmits the control guidelines set in the steps S610, S630, or S640 to the unit controllers 17 of each of the recovery units 10A-10C (TRANSMIT CONTROL GUIDELINE). Then, as shown in FIG. 10, for example, each of the unit controllers 17A-17C of each of the recovery units 10A-10C executes control (a series of control sequence) for carbon dioxide recovery according to the received control guidelines. Although FIG. 12 shows each of the unit controllers 17A-17C starting a series of control sequence after receiving the control guidelines, this is for convenience of illustration. Each of the unit controllers 17A-17C repeatedly executes a series of control sequence, regardless of whether or not a control guideline is received from the main controller 1, until a stop command is received as a control guideline.

In the following description and drawings, listed symbols are used to explain technical elements and technical words listed after the symbol, UC: an unit controller, SET GUIDELINE: set a control guideline, RA: a recovery amount, CALCULATE RA: calculate a recovery amount, AD: an adsorption mode, SV: a scavenging mode, DS: a desorption mode, RV: a recovery mode, RTRN: a recovery transition request notice, ACRA: an assumed CO2 recovery amount, RTPN: a recovery transition permission notice, RCN: a recovery completion notice, RAF/B: a feedback of a recovery amount, RARN: a recovery amount receipt notice, EGCM: an energy consumption, PRO: a preferential recovery operation, SRO: a simultaneous recovery operation, AMET: an adsorption mode execution time, SMET: a scavenging mode execution time, and DMET: a desorption mode execution time.

As shown in FIG. 10, each one of the unit controllers 17A-17C transmits the recovery transition request notice to the main controller 1 if the desorption mode of the series of control sequences ends. This recovery transition request notice includes identification information for identifying each one of the unit controllers 17A-17C and an assumed amount of the CO2 recovery amount. The assumed amount of the CO2 recovery amount is also referred to as an assumed CO2 recovery amount. Each of the unit controllers 17A-17C can estimate the amount of carbon dioxide adsorbed by the adsorbent of the electrochemical cell 12a by executing the adsorption mode based on the adsorption amount change map data. Each of the unit controllers 17A-17C can obtain an assumed CO2 recovery amount from the carbon dioxide adsorption amount, assuming that all the carbon dioxide adsorbed by the adsorbent of the electrochemical cell 12a is recovered. The main controller 1 functions as a recovery arbitration unit 1c in which at least two recovery transition request notices from the recovery units 10A-10C are arbitrated, and then a transition permission notice to the recovery mode is sent back to the unit controller 17 of each one of the recovery units 10A-10C. The transit permission notice to the recovery mode may be referred to as the recovery transition permission notice. The processing for causing the main controller 1 to function as the recovery arbitration unit 1c is described later in detail.

Each of the unit controllers 17A-17C starts the recovery mode upon receiving the recovery transition permission notice. That is, each of the unit controllers 17A-17C does not immediately execute the recovery mode after the desorption mode ends, but waits for transition to the recovery mode until receiving the recovery transition permission notice from the main controller 1. If the recovery mode is started, the carbon dioxide desorbed from the adsorbent of the electrochemical cell 12a is sucked and transferred toward the CO2 recovery tank 3 by starting to drive the pump 13. At this time, the concentration and the flow rate of the carbon dioxide flowing through the channel toward the CO2 recovery tank 3 are measured by the CO2 sensor 2.

The main controller 1 determines that a carbon dioxide recovery from each of the recovery units 10A-10C is completed and calculates the carbon dioxide recovery amount based on the concentration and/or the flow rate of carbon dioxide detected by the CO2 sensor 2. That is, the main controller 1 may determine that the carbon dioxide recovery has ended if the concentration and/or the flow rate of carbon dioxide detected by the CO2 sensor 2 falls below a threshold value for determining the end of carbon dioxide recovery. If it is determined that the carbon dioxide recovery has completed, the main controller 1 transmits a recovery completion notice to a corresponding one of the recovery units 10A-10C, as shown in FIG. 10. Furthermore, the main controller 1 can calculate the carbon dioxide recovery amount based on the concentration and the flow rate detected by the CO2 sensor 2 while the recovery mode is being executed.

After calculating the carbon dioxide recovery amount, the main controller 1 perform a feedback operation of the calculated recovery amount to each of the unit controllers 17A-17C. Thereby, each of the unit controllers 17A-17C can acquire the actual carbon dioxide recovery amount. The actual carbon dioxide recovery amount may be used when each of the unit controllers 17A-17C determines whether it is necessary to update the adsorption amount change map data.

Each of the unit controllers 17A-17C, as shown in FIG. 10, sends back a recovery amount receipt notice upon receiving the carbon dioxide recovery amount from the main controller 1. This recovery amount receipt notice includes an energy amount consumed for performing a series of the control sequence in each of the recovery units 10A-10C. Each of the recovery units 10A-10C consumes energy for driving the blower 16, applying voltage to the electrochemical cell 12a, driving the pump 13, and the like while executing a series of control sequence. Each of the unit controllers 17A-17C can calculate the energy consumption of each device from, for example, drive current, drive voltage, and drive time.

If the main controller 1 receives the recovery amount receipt notice from each of the unit controllers 17A-17C, it becomes possible to transmit the recovery transition permission notice to the unit controllers 17A-17C of the other collection units 10A-10C. In addition, the main controller 1 acquires a consumed energy amount from each of the unit controllers 17A-17C, thereby may be able to calculate, for example, the unit amount energy described above.

Here, FIG. 10 shows an example in which the recovery units 10A-10C end the desorption mode at different timings, and the unit controllers 17A-17C of the recovery units 10A-10C transmit the recovery transition request notices at different timings. In such a case, the main controller 1 may transmit the recovery transition permission notices in an order in which the recovery transition request notices were received. However, depending on the circumstances, there may be a plurality of the recovery transition request notices simultaneously transmitted from a plurality of the unit controllers 17A-17C.

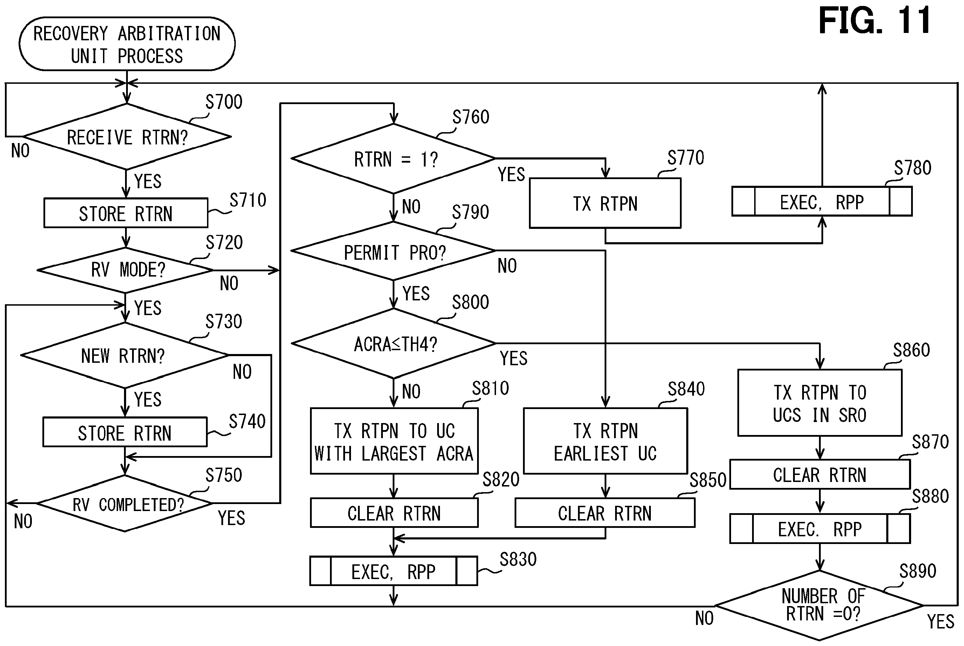

Therefore, the main controller 1 has a recovery arbitration unit 1c that arbitrates the transition to the recovery mode of the plurality of the recovery units 10A-10C in the case that a plurality of the recovery units 10A-10C request transition to the recovery mode at the same time. Hereinafter, processing executed by the main controller 1 to function as the recovery arbitration unit 1c is described with reference to the flowchart of FIG. 11.

In a first step S700, the main controller 1 determines whether or not the recovery transition request notice (RTRN) has been received (RECEIVE RTRN?). If the recovery transition request notice is received, the main controller 1 proceeds to a process of a step S710. If the recovery transition request notice is not received, the main controller 1 repeats the process of the step S700 and waits for reception of the recovery transition request notice.

At the step S710, the main controller 1 stores the recovery transition request notice (STORE RTRN). Next, in a step S720, the main controller 1 determines whether the recovery mode is currently being executed in any one of the recovery units 10A-10C. If it is determined that the recovery mode is being executed in any one of the recovery units 10A-10C, the main controller 1 proceeds to a process of a step S730. If it is determined that the recovery mode is not being executed in any one of the recovery units 10A-10C, the main controller 1 proceeds to a process of a step S760.

In the step S730, the main controller 1 determines whether or not a new set of the recovery transition request notice has been received (NEW RTRN?). If a new set of the recovery transition request notice is received, the main controller 1 proceeds to a step S740 and stores the new one of the recovery transition request notice (STORE RTRN). After that, the main controller 1 proceeds to a process of a step S750. If the recovery transition request notice is not received, the main controller 1 proceeds to a process of a step S750.

In the step S750, the main controller 1 determines whether or not the recovery mode being executed has been completed (RV COMPLETED?). If the main controller 1 determines that the recovery mode has been completed, the process proceeds to the step S760. On the other hand, if it is determined that the recovery mode has not been completed, the main controller 1 returns to the process of the step S730. Therefore, when a new set of the recovery transition request notice is received while the recovery mode is being executed, it is possible to store the received set of the recovery transition request notice completely in the step S740. In the step S760, the main controller 1 determines whether or not the number of stored recovery transition request notices (RTRN) is only one (RTRN=1?). If only one of the recovery transition request notice is stored, the main controller 1 proceeds to a step S770. In the step S770, the main controller 1 transmits the recovery transition permission notice to one of the unit controllers 17A-17C that transmitted the recovery transition request notice. In addition, the main controller 1 clears the stored recovery transition request notice. After that, the main controller 1 proceeds to a step S780 and executes the recovery period process. The recovery period process is described in detail later. If the number of recovery transition request notice stored is two or more, the main controller 1 proceeds to a process of a step S790.

In the step S790, the main controller 1 determines whether or not it is permitted to perform a preferential recovery operation (PRO), in which the recovery transition permission notice is transmitted in ascending order of the assumed CO2 recovery amount, regardless of the order in which the recovery transition request notice are received (PERMIT PRO?). For example, if the user requests an improvement in the carbon dioxide recovery amount, this request may be considered that the preferential recovery operation is permitted. Alternatively, it is possible to determine that the preferential recovery operation is permitted except when the user requests reduction of energy consumption. Alternatively, it is possible to determine that the preferential recovery operation is always permitted by omitting a determination process of the step S790. In the case that the determination process in the step S790 is omitted, the process of the steps S840 and S850 may also be omitted. Alternatively, the processes of the steps S840 and S850 may be executed when another condition (for example, when the user requests to reduce energy consumption) is satisfied. If it is determined that the preferential recovery operation is permitted, the main controller 1 proceeds to a process of a step S800. On the other hand, if it is determined that the preferential recovery operation is not permitted, the main controller 1 proceeds to a process of a step S840.

In the step S800, the main controller 1 determines whether or not the largest one ACRA of the assumed CO2 recovery amounts is equal to or less than a predetermined reference value TH4 (ACRA≤TH4). The largest one of the assumed CO2 recovery amounts is the largest one of the assumed CO2 recovery amounts among the plurality of the recovery units 10A-10C transmitted the recovery transition request notice. If the largest one of the assumed CO2 recovery amount is equal to or less than the reference value TH4, this means all the assumed CO2 recovery amounts of the plurality of the recovery units 10A-10C transmitted the recovery transition request notice, including the corresponding one of the recovery unit 10A-10C, are equal to or less than the reference value TH4. In this case, it seems better to save time for executing the recovery mode for one of the recovery units 10A-10C having more assumed CO2 recovery amount by executing the recovery modes simultaneously and collectively recover carbon dioxide, rather than executing the recovery modes separately and recovers carbon dioxide individually. Therefore, if it is determined that the largest one of the assumed CO2 recovery amounts (ACRAs) among the recovery units 10A-10C is equal to or less than the predetermined reference value TH4 (ACRA≤TH4), the main controller 1 proceeds to a process of a step S860. On the other hand, it is determined that the largest one of the assumed CO2 recovery amounts among the recovery units 10A-10C is greater than the predetermined reference value TH4 (ACRA>TH4), the main controller 1 proceeds to a process of a step S810.

Note that the process of the step S800 may be executed on condition that the user requests an improvement in the carbon dioxide recovery amount in the case of the process of the step S790 is omitted.

In the step S810, the main controller 1 transmits the recovery transition permission notice (RTPN) to one of the unit controllers 17A-17C of the recovery units 10A-10C which has the largest one of the assumed CO2 recovery amounts (ACRAs) among the recovery units 10A-10C (UC WITH LARGEST ACRA) in a preferential manner, regardless of the order in which the recovery transition request notice were sent (TX RTPN TO UC WITH LARGEST ACRA). The one of the recovery units 10A-10C which has the largest one of the assumed CO2 recovery amounts among the recovery units 10A-10C is expected to transfer the most amount of carbon dioxide.

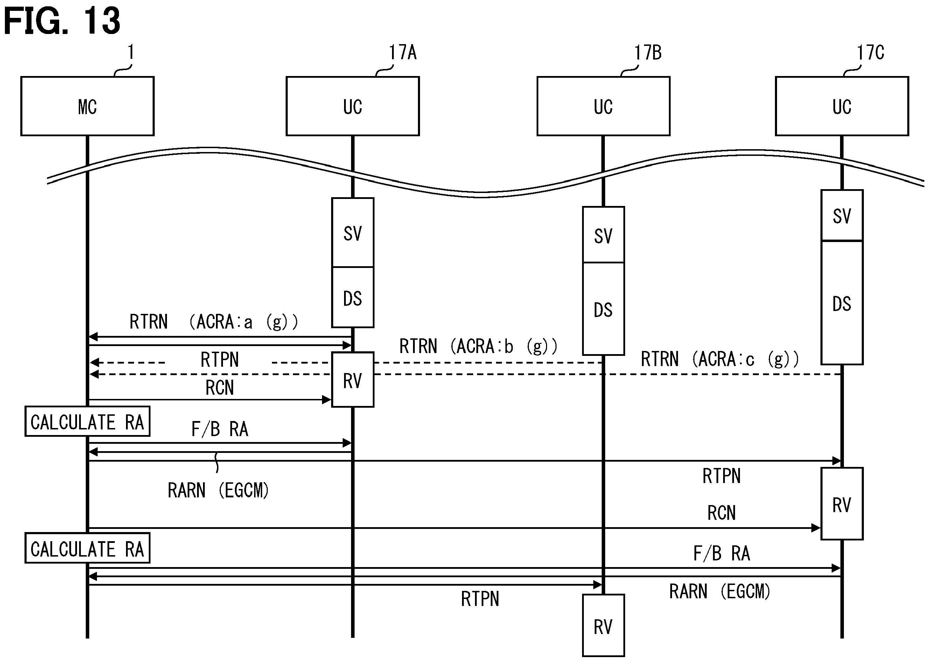

FIG. 13 shows an example of the preferential recovery operation. In the example shown in FIG. 13, the main controller 1 transmits the recovery transition permission notice (RTPN) to the unit controller 17A, and the recovery mode is executed in the recovery unit 10A. In the period during the RTPN transmission and the recovery mode execution for the recovery unit 10A, the main controller 1 continuously receive the recovery transition request notice (RTRN) from the remaining unit controllers including both the unit controller 17B and the unit controller 17C. Each recovery transition request notice (RTRN) includes an assumed CO2 recovery amount (ACRA), and the assumed CO2 recovery amount c (g) of the recovery unit 10C is larger than the assumed CO2 recovery amount b (g) of the recovery unit 10B. Therefore, even though the main controller 1 has received the recovery transition request notice (RTRN) from the unit controller 17B first, the main controller 1 transmits the recovery transition permission notice (RTPN) to the unit controller 17C earlier than the unit controller 17B after the recovery mode of the collection unit 10A is completed. In this way, the main controller 1 preferentially transmits the recovery transition permission notice to one of the unit controllers 17A-17C of the collection units 10A-10C which is expected to transfer more carbon dioxide.

As a result, the unit controllers 17A-17C are configured to transmit a notice to request a transfer permission to the main controller 1 when one of the recovery unit 10A-10C becomes capable of transferring carbon dioxide, and to transfer carbon dioxide from corresponding one of the recovery unit 10A-10C to the carbon dioxide recovery tank 3 in response to receiving the transfer permission of carbon dioxide from the main controller 1. The main controller 1 is configured to transmit, in the case that a plurality of notices to request a transfer permission from a plurality of the unit controllers 17A-17C are simultaneously received, the notice of the transfer permission of carbon dioxide to one of the unit controllers 17A-17C which is expected to transfer more carbon dioxide in a preferential manner. Alternatively, the main controller 1 may be configured to transmit, in the case that a user request to give priority to recovery of carbon dioxide is received, the notice of the transfer permission of carbon dioxide to one of the unit controllers 17A-17C which is expected to transfer more carbon dioxide in a preferential manner.

Then, the main controller 1 clears the recovery transition request notice from the corresponding one of the unit controllers 17A-17C in the step S820 (CLEAR RTRN). After that, the main controller 1 proceeds to a step S830 and executes the recovery period process (EXEC. RPP). The recovery period process (RPP) in the step S830 (EXEC. RPP) is the same as the recovery period process in the step S780. Furthermore, the main controller 1 also executes the process of the step S730 in parallel with the execution of the recovery period process of the step S830. As a result, the new recovery transition request notice may be stored when a new recovery transition request notice is received during execution of the recovery mode.

In the step S840, the preferential recovery operation is not permitted, so the main controller 1 transmits the recovery transition permission notice (RTPN) to the earliest one of the unit controllers 17A-17C that have transmitted the recovery transition request notice earliest (TX RTPN EARLIEST UC). Then, the main controller 1 clears the recovery transition request notice (RTRN) from the corresponding one of the unit controllers 17A-17C in the step S850 (CLEAR RTRN). After that, the main controller 1 proceeds to the step S830 and executes the recovery period process (EXEC. RPP).

In the step S860, the main controller 1 transmits a recovery transition permission notice (RTPN) to the unit controllers 17A-17C of the plurality of the recovery units 10A-10C which recover simultaneously, in order to perform the simultaneous recovery operation (SRO) (TX RTPN TO UCS IN SRO).

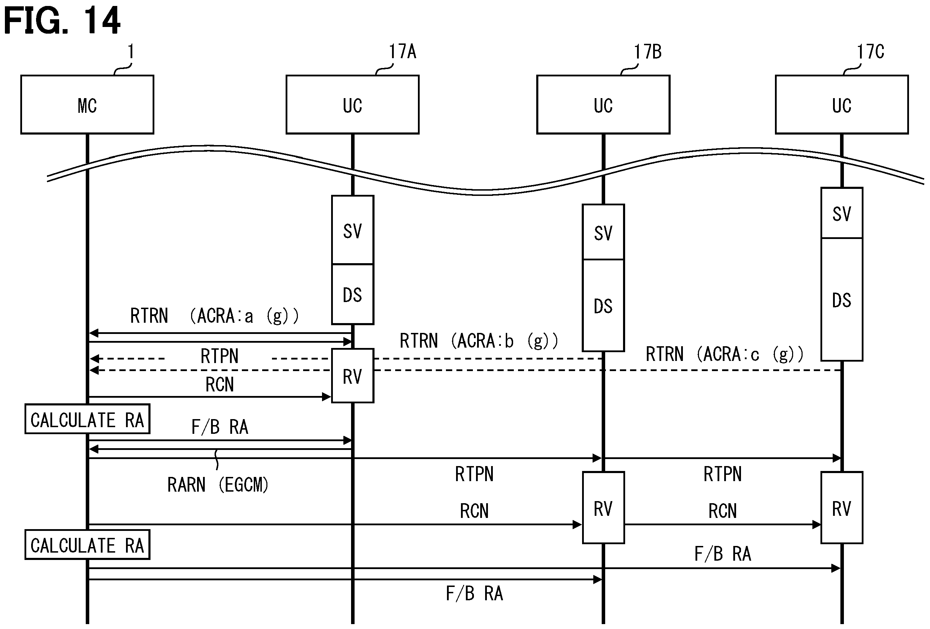

FIG. 14 shows an example of the simultaneous recovery operation (SRO). In the example shown in FIG. 14, the main controller 1 transmits the recovery transition permission notice (RTPN) to the unit controller 17A, and the recovery mode is executed in the recovery unit 10A. In the period during the RTPN transmission and the recovery mode execution for the recovery unit 10A, the main controller 1 continuously receive the recovery transition request notice (RTRN) from the remaining unit controllers including both the unit controller 17B and the unit controller 17C. Each recovery transition request notice (RTRN) includes an assumed CO2 recovery amount (ACRA), and the assumed CO2 recovery amount b (g) of the recovery unit 10B is equal to or less than the assumed CO2 recovery amount c (g) of the recovery unit 10C. Therefore, the main controller 1 simultaneously transmits the recovery transmission permission notices to the unit controllers 17B and 17C after the recovery mode of the recovery unit 10A is completed. In this manner, the main controller 1 simultaneously recovers carbon dioxide from the recovery units 10B and 10C.

Note that if the simultaneous recovery operation is performed, the main controller 1 cannot individually detect the carbon dioxide recovery amount from the plurality of recovery units 10A-10C. Therefore, the main controller 1 calculates the recovery amount of each one of the recovery units 10A-10C by proportionally dividing the recovery amount calculated from the detected value of the CO2 sensor 2 according to the assumed CO2 recovery amount from each one of the recovery units 10A-10C. Then, individual calculated values of the recovery amount of the recovery units 10A-10C are send back to the respective unit controllers 17A-17C as a feedback recovery amount (F/B RA).

For example, as shown in FIG. 14, if the recovery unit 10B and the recovery unit 10C are targeted for the simultaneous recovery operation, assume that the carbon dioxide recovery amount by the simultaneous recovery operation is d (g).

The main controller 1 divides this recovery amount d (g) in a proportional manner based on a ratio of the assumed CO2 recovery amount b (g) of the recovery unit 10B and the assumed CO2 recovery amount c (g) of the recovery unit 10C. In this case, the CO2 recovery amount of the recovery unit 10B is d(b/(b+c)), and the CO2 recovery amount of the recovery unit 10C is d(c/(b+c)).

Then, the main controller 1 clears the recovery transition request notice (RTRN) from the corresponding one of the unit controllers 17A-17C in the step S870 (CLEAR RTRN). After that, the main controller 1 proceeds to a step S880 and executes the recovery period process (RPP) (EXEC. RPP). The recovery period process in the step S880 is the same as the recovery period process in the steps S780 and S830.

The main controller 1 executes a process of the step S890 in parallel with the execution of the recovery period process of the step S880. In the step S890, it is determined whether or not the number of stored recovery transition request notices has become zero due to the execution of the simultaneous recovery operation (NUMBER OF RTRN =0?). If the number of the recovery transition request notice becomes zero (0), the main controller 1 proceeds to a process of a step S700. If the number of the recovery transition request notice does not become zero (0), the main controller 1 proceeds to a process of a step S730.

In this embodiment, the carbon dioxide recovery system may be configured in the following configurations. The unit controller 17A-17C may be configured to transmit a notice to request a transfer permission to the main controller 1 when one of the recovery units 10A-10C becomes capable of transferring carbon dioxide. The unit controller 17A-17C may be configured to transfer carbon dioxide from the recovery units 10A-10C to the carbon dioxide recovery tank 3 in response to receiving the notice of the transfer permission of carbon dioxide from the main controller 1. The main controller 1 may be configured to transmit the notice of the transfer permission of carbon dioxide simultaneously to the unit controllers 17A-17C corresponding to a plurality of the recovery units 10A-10C when the plurality of the recovery units 10A-10C being able to transfer carbon dioxide amounts less than a predetermined threshold among a plurality of the unit controllers 17A-17C from which a plurality of notices to request a transfer permission are simultaneously received. The main controller may be configured to transmit, in the case that a user request to give priority to recovery of carbon dioxide is received, the notice of the transfer permission of carbon dioxide simultaneously to the unit controllers corresponding to a plurality of the recovery units being able to transfer only carbon dioxide amounts less than a predetermined threshold.

Next, the recovery period process of the steps S780, S830, and S880 of the flowchart of FIG. 11 is described with reference to the flowchart of FIG. 12.

In a first step S900, the main controller 1 stores the measured values of the concentration and the flow rate measured by the CO2 sensor 2 after transmitting the recovery transfer permission notice. The process of the step S900 is repeated until the main controller 1 determines that a measured value of the CO2 sensor 2 has decreased equal to or less than a predetermined value or less and the recovery of carbon dioxide has completed in the next step S910.

In the step S920, the main controller 1 calculates the carbon dioxide recovery amount from the recovery units 10A-10C to the CO2 recovery tank 3 using the repeatedly stored measurement values of the CO2 sensor 2 during the execution period of the recovery mode. In a step S930, the main controller 1 transmits the calculated value of the carbon dioxide recovery amount to the corresponding unit controllers 17A-17C. However, if the simultaneous recovery operation is performed, the recovery amount of each of the recovery units 10A-10C is calculated by a proportional division calculation described above, and the calculated recovery amount is transmitted to each of the unit controllers 17A-17C. In the step S940, the main controller 1 determines whether or not the recovery amount receipt notice has been received from the unit controllers 17A-17C. If the recovery amount receipt notice is received, the main controller 1 proceeds to a process of a step S950. In the step S950, the main controller 1 stores the amount of energy consumption included in the recovery amount receipt notice. As a result, the main controller 1 determines that the recovery mode is completed, and terminates the recovery period process shown in the flowchart of FIG. 12.

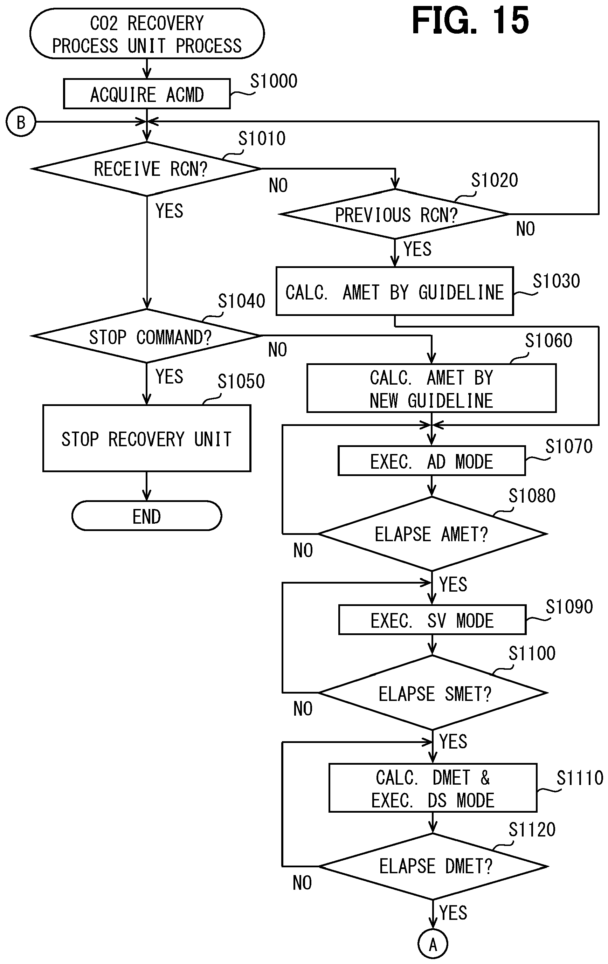

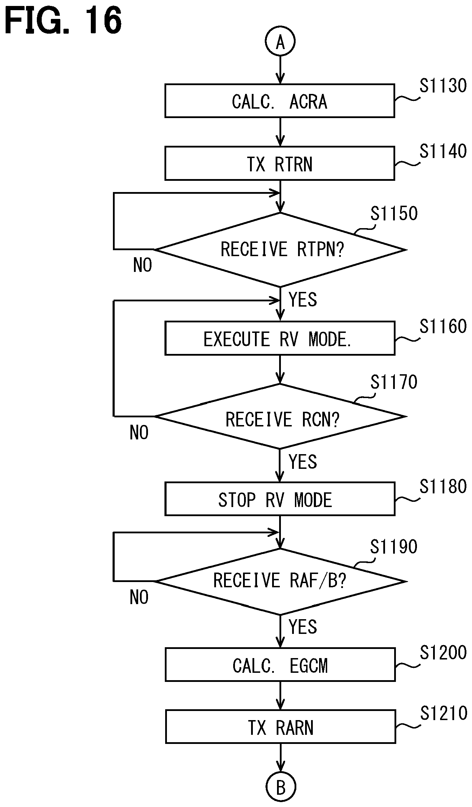

Next, process for functioning each of the unit controllers 17A-17C as the CO2 recovery unit 17a is described with reference to the flowcharts of FIG. 15 and FIG. 16. Each of the unit controllers 17A-17C can execute a recovery procedure of carbon dioxide and a transferring procedure of the recovered carbon dioxide to the CO2 recovery tank 3 by controlling the blower 16, the channel on/off valve 11, the electrochemical cell 12a, the pump 13, the channel switching valve 14, and the electromagnetic 15 by executing instructions shown in the flowcharts of FIG. 15 and FIG. 16.

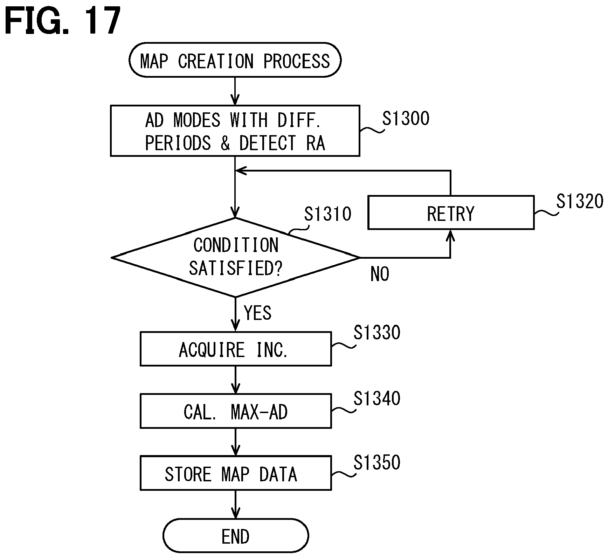

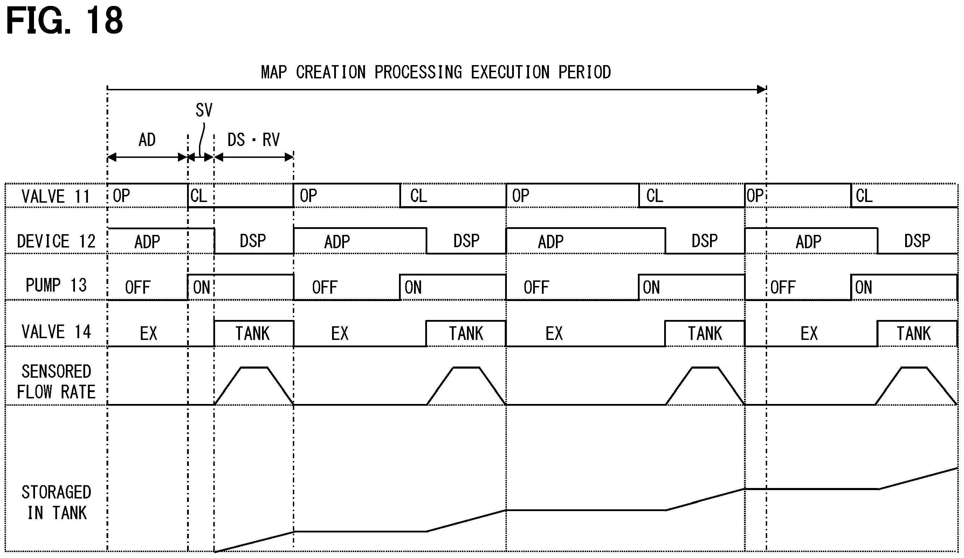

In a first step S1000, each one of the unit controllers 17A-17C acquires the adsorption amount change map data. This adsorption amount change map data may be acquired from, for example, the external server 6 or may be created by each of the unit controllers 17A-17C. The adsorption amount change map data obtained from the external server 6 or created by itself is stored in the storage unit 18. Each of the unit controllers 17A-17C can obtain the adsorption amount change map data by reading the adsorption amount change map data from the storage section 18. A method for creating adsorption amount change map data is described with reference to the flowchart of FIG. 17 and the timing diagram of FIG. 18. Hereinafter, the unit controller 17A is used as a representative unit controller. The ordinally skilled person in this field understands operations and functions of the unit controllers 17B and 17C from this description. The adsorption amount change map data may be created by each of the unit controllers 17A-17C, or the adsorption amount change map data may be created by one unit controller (for example, the unit controller 17A) and may be transferred to other unit controllers.

In a step S1300, the unit controller 17A executes the adsorption mode for a plurality of times with a plurality of adsorption mode execution periods (adsorption time periods) which are different from each other (AD MODES WITH DIFF. PERIODS & DETECT RA). Further, the unit controller 17A acquires the carbon dioxide recovery amounts (RAs) in a plurality of recovery modes executed corresponding to each adsorption mode through communication with the main controller 1. For example, FIG. 18 shows an example in which three times of the adsorption mode are executed at different adsorption mode execution periods. The number of times of execution of the multiple times of the adsorption mode may be two. Moreover, although FIG. 18 shows an example in which the desorption mode and the recovery mode are performed simultaneously, the desorption mode and the recovery mode may be performed separately.

In FIG. 18, the execution time of the adsorption mode in the first time is relatively short, and the adsorption mode execution time is set so that the carbon dioxide adsorption amount of the electrochemical cell 12a does not reach the adsorption amount upper limit value of the electrochemical cell 12a. Therefore, the carbon dioxide recovery amount detected when the recovery mode corresponding to the first time of execution of the adsorption mode is an amount less than an upper limit value of the carbon dioxide adsorption amount of the electrochemical cell 12a.

A second time of the adsorption mode execution time is set to be relatively long such that the carbon dioxide adsorption amount of the electrochemical cell 12a reaches substantially the adsorption amount upper limit value. Therefore, the carbon dioxide recovery amount detected when the recovery mode corresponding to the second time of execution of the adsorption mode is executed, is an amount substantially equal to the adsorption amount upper limit value of the electrochemical cell 12a.

A third time of the adsorption mode execution time is set to be the longest such that, even after the carbon dioxide adsorption amount of the electrochemical cell 12a reaches the adsorption amount upper limit value, the adsorption mode is still executed for a certain period of time. Therefore, the carbon dioxide recovery amount detected when the recovery mode corresponding to the execution time of the third time of the adsorption mode is executed, is an amount substantially equal to the adsorption amount upper limit value of the electrochemical cell 12a. In a step S1310 of the flowchart of FIG. 17, the unit controller 17A determines whether or not the map creation condition is satisfied based on the carbon dioxide recovery amount in three times of the recovery modes described above. For example, the unit controller 17A determines, as a map creation condition, that whether or not it is possible to plot each one of the carbon dioxide recovery amount acquired in three times of the recovery modes described above on a single adsorption amount change map. Further, the unit controller 17A may determine, as a map creation condition, that there is a maximum value of the carbon dioxide recovery amount that is not plotted on the same straight line among the carbon dioxide recovery amounts in three times of the recovery modes. Note that a criteria may include a tolerance to determine the plots are on the same straight line. If the unit controller 17A determines that the map creation condition is satisfied, the unit controller 17A proceeds to a step S1320. If the unit controller 17A determines that the map creation condition is not satisfied, the unit controller 17A proceeds to a step S1320.

In the step S1320, the unit controller 17A again executes the adsorption mode for a plurality of times. The plurality of times of the adsorption mode have different adsorption mode execution periods of time (adsorption periods). The unit controller 17A acquires a plurality of carbon dioxide recovery amounts for a plurality of times of the recovery mode. At this time, it is desirable that the unit controller 17A makes the execution time of the third adsorption mode longer than a previous one of the execution time of the third adsorption mode.

Then, in the S1310, the unit controller 17A determines whether or not the map creation condition is satisfied based on a plurality of the carbon dioxide recovery amounts obtained in the process of the step S1320. The unit controller 17A repeatedly executes the processes of the steps S1310 and S1320 until a positive determination is made in the step S1310.

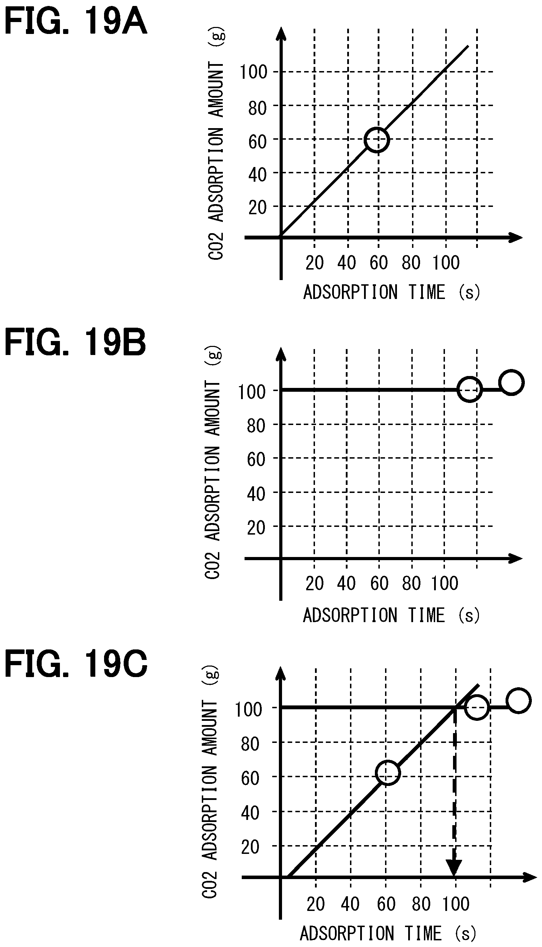

A maximum adsorption amount of the electrochemical cell 12a and a maximum adsorption amount time, which is an adsorption mode execution time to obtain the maximum adsorption amount, are estimated based on the carbon dioxide adsorption amount during the execution of the multiple times of the adsorption mode and the multiple times of the recovery mode corresponding to each adsorption mode. Hereinafter, a procedure of an estimating method of the maximum adsorption amount and the maximum adsorption amount time is explained with reference to FIGS. 19A,19B, and 19C showing specific examples of method for estimating the maximum adsorption amount and the maximum adsorption amount time of the electrochemical cell 12a.

In a step S1330, an inclination of the straight line indicating the relationship between the maximum adsorption amount and the maximum adsorption amount time is determined in the adsorption amount change map as shown in FIG. 19A (ACQUIRE INC.). FIG. 19A is a graph showing a carbon dioxide adsorption amount of the electrochemical cell 12a and the execution time of the first time of the adsorption mode, based on the carbon dioxide recovery amount acquired when the recovery mode corresponding to the first time of the adsorption mode is executed. Note that the carbon dioxide adsorption amount of the electrochemical cell 12a is considered to be equal to an acquired value of the carbon dioxide recovery amount. As described above, the execution time of the first time of the adsorption mode is relatively short and is set so that the carbon dioxide adsorption amount of the electrochemical cell 12a does not reach the adsorption amount upper limit value. Therefore, as shown in FIG. 19A, an increasing inclination line (slope) can be determined, by assuming that the carbon dioxide adsorption amount also linearly increases as the execution time of the adsorption mode becomes longer, based on the carbon dioxide adsorption amount of the electrochemical cell 12a by executing the first time of the adsorption mode.

In a step S1340, a carbon dioxide maximum adsorption amount is calculated (CALC. MAX-AD). FIG. 19B is a graph showing the carbon dioxide adsorption amount of each of the electrochemical cells 12a and the execution time of the second time and the third time of the adsorption modes, based on the carbon dioxide recovery amount acquired when a recovery mode corresponding to the second time and the third time of the adsorption modes is executed. As described above, the execution time of the second time of the adsorption mode is relatively long and is set so that the carbon dioxide adsorption amount of the electrochemical cell 12a reach the adsorption amount upper limit value. The execution time of the third time of the adsorption mode is set to be the longest and is set so that the adsorption mode is still executed for a certain period of time even after the carbon dioxide adsorption amount of the electrochemical cell 12a reaches the adsorption amount upper limit value. Therefore, as shown in FIG. 19B, it is possible to determine an upper limit line of the carbon dioxide adsorption amount of the electrochemical cell 12a based on the carbon dioxide adsorption amount of the electrochemical cell 12a by executions of the second time and the third time of the adsorption mode. The carbon dioxide adsorption amount corresponding to the upper limit line corresponds to the maximum adsorption amount that the adsorbent of the electrochemical cell 12a can adsorb.

The upper limit line of the carbon dioxide adsorption amount of the electrochemical cell 12a may be determined based on the carbon dioxide adsorption amount of the electrochemical cell 12a that can be obtained through the execution of one time of the adsorption mode and the recovery mode corresponding to the one time of the adsorption mode.

In the step S1340, as shown in FIG. 19C, it is possible to determine the maximum adsorption period of time, which is the maximum adsorption amount time that is the adsorption mode execution time to obtain the maximum adsorption amount, based on an intersection between an increasing gradient line in FIG. 19A and an upper limit line in FIG. 19B.

In this way, the unit controller 17A can estimate the carbon dioxide maximum adsorption amount of the electrochemical cell 12a and the maximum adsorption amount time, which is an adsorption mode execution time for obtaining the maximum adsorption amount. The carbon dioxide maximum adsorption amount and the maximum adsorption amount time may be estimated based on the carbon dioxide recovery amount obtained during the multiple adsorption modes and the multiple recovery modes corresponding to the respective adsorption modes are executed. Then, the unit controller 17A can acquire an adsorption amount change map data showing a relationship between an adsorption mode execution time (an adsorption time) and a carbon dioxide adsorption amount (i.e., a carbon dioxide recovery amount) in the electrochemical cell 12a based on an estimated value of a carbon dioxide maximum adsorption amount and a maximum adsorption amount time, as shown in FIG. 20. The obtained adsorption amount change map data is stored in the storage unit 18 in a step S1350 (STORE MAP DATA).

Returning again to the flowchart of FIG. 15, the description is continued. In a step S1010, the unit controller 17A determines whether or not the recovery completion notice (RCN) has been received from the main controller 1 (RECEIVE RCN?). If the control guideline has been received, the unit controller 17A proceeds to a process of a step S1040. If the control guideline has not been received, the unit controller 17A proceeds to a process of a step S1020.

In the step S1020, the unit controller 17A determines whether or not the control guideline has been previously received (PREVIOUS RCN?). If the control guideline had been received before, the unit controller 17A returns to the process of the step S1030. If the control guideline has not been received before, the unit controller 17A returns to the process of the step S1010.

In a step S1030, the unit controller 17A calculates an adsorption mode execution time (AMET) based on the received control guideline (CALC. AMET BY GUIDELINE). A method for calculating the adsorption mode execution time is described in detail below.

In the step S1040, the unit controller 17A determines whether or not the received control guideline is a stop command (STOP COMMAND?). If the received control guideline is a stop command, the unit controller 17A proceeds to a process of a step S1050. On the other hand, if the received control command is not the stop command, the unit controller 17A proceeds to a process of a step S1060.

In the step S1050, the unit controller 17A stops the operation of the recovery unit 10A according to stop modes commanded (STOP RECOVERY UNIT). That is, if the stop command is an emergency stop command, the unit controller 17A immediately stops the operation of the recovery unit 10A. If it is the protective stop command, the unit controller 17A closes the channel on/off valve 11, drives the channel switching valve 14 to communicate with the outside, and drives the electromagnetic valve 15 to close, and then stops the operation of the recovery unit 10A. If the stop command is the normal stop, the unit controller 17A stops the operation of the recovery unit 10A after finishing the control (a series of control sequence) for carbon dioxide recovery being executed in the recovery unit 10A. In a step S1060, the unit controller 17A calculates an adsorption mode execution time (AMET) based on a new one of the received control guideline (CALC. AMET BY NEW GUIDELINE). A method for calculating the adsorption mode execution time is described in detail below.

The adsorption mode execution time (adsorption time) may be obtained from the adsorption amount change map data shown in FIG. 20 based on the control guideline. For example, in the case that a target recovery rate of X% indicating the normal operation is given as a control guideline, the unit controller 17A can determine an adsorption time corresponding to an adsorption amount, which is X% of the carbon dioxide maximum adsorption amount of the electrochemical cell 12a, by referring to the adsorption amount change map data. Even if a target recovery rate of 100% or a target recovery rate of X+α% is given as a control guideline, the adsorption time corresponding to each adsorption amount can be obtained by referring to the adsorption amount change map data. Further, for example, if a target suppression rate is given as a control guideline, the corresponding adsorption time is obtained from the adsorption amount change map data by converting the target suppression rate into the target recovery rate as described above. Furthermore, if an operation time is given as a control guideline, it is possible to determine an adsorption time by proportionally dividing the operation time into the adsorption mode, the scavenging mode, and the desorption mode, or the scavenging mode is set to a fixed time and the remaining time is divided into the adsorption mode and the desorption mode. Each one of the unit controllers17A-17C determines at least an adsorption time in which the electrochemical cell 12a adsorbs carbon dioxide as the control content of the electrochemical cell 12a, the channel on/off valve 11, and the pump 13. Each one of the unit controllers17A-17C controls the electrochemical cell 12a, the channel on/off valve 11, and the pump 13 so that the electro chemical cell 12a adsorbs carbon dioxide for a determined value of the adsorption time.

However, the carbon dioxide adsorption performance of the electrochemical cell 12a gradually deteriorates as it is used repeatedly. Regardless of such aging deterioration, if the adsorption amount change map data created at the beginning of use of the electrochemical cell 12a is used as it is, there may be a possibilities that the carbon dioxide recovery amount corresponding to the adsorption time cannot be obtained, or energy consumption is wasted.

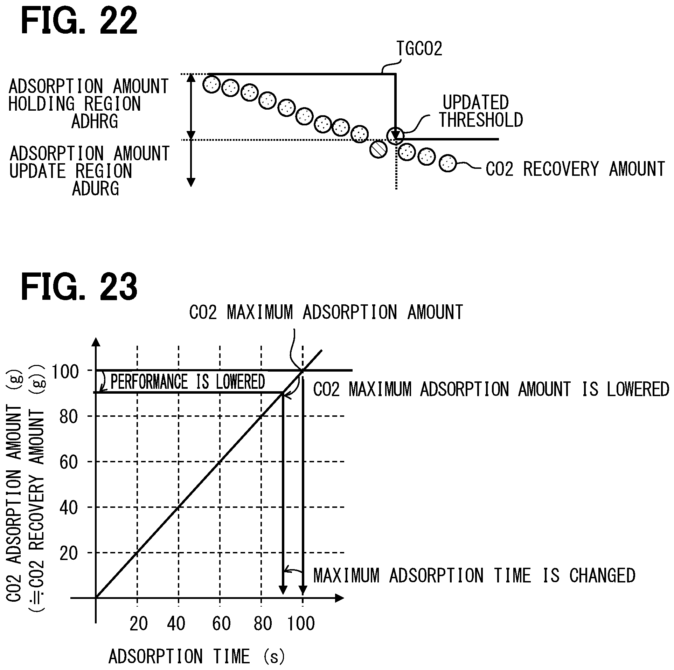

Therefore, in the present embodiment, as shown in the flowchart of FIG. 21, in a step S1400, if it is determined that the carbon dioxide recovery amount has fallen below an update threshold value set based on the target carbon dioxide adsorption amount, the unit controller 17A updates the adsorption amount change map data so as to lower the upper limit of the carbon dioxide adsorption amount (carbon dioxide maximum adsorption amount) by, for example, an amount corresponding to the update threshold in the step S1420. In this case, for example, as shown in FIG. 23, the unit controller 17A updates the adsorption amount change map data so that the carbon dioxide maximum adsorption amount is reduced by the update threshold value. After the adsorption amount change map data is updated, the CO2 recovery unit 17a of the unit controller 17A calculates the adsorption time corresponding to the control guideline based on the updated adsorption amount change map data. On the other hand, as shown in FIG. 22, if an acquired value of the carbon dioxide recovery amount belongs to a range from a target carbon dioxide adsorption amount to an update threshold value, the unit controller 17A maintains the adsorption amount change map data in a step S1410.

By executing such an update process of the adsorption amount change map data, even if the carbon dioxide adsorption performance of the electrochemical cell 12a is degraded, the unit controller 17A can be obtained the adsorption time appropriately.

The explanation is continued by returning to the flowchart of FIG. 15. If the adsorption mode execution time is calculated in the step S1030 or a step S1060, the unit controller 17A executes the adsorption mode in a step S1070 (EXEC. AD MODE). In this adsorption mode, the channel on-off valve 11 is opened such that the atmosphere containing carbon dioxide can be introduced into the recovery device 12. If the blower 16 is provided, the blower 16 is driven at a constant rotational speed. Also, in the adsorption mode, an adsorption potential is applied to the electrochemical cell 12a. Furthermore, in the adsorption mode, the channel switching valve 14 is controlled such that the channel n the downstream side of the pump 13 communicates with the outside.

In subsequent step S1080, the unit controller 17A determines whether or not the calculated value of the adsorption mode execution time has elapsed (ELAPSE AMET?). If it is determined that the adsorption mode execution time has elapsed, the unit controller 17A proceeds to a process of a step S1090. On the other hand, if it is determined that the calculated adsorption mode execution time has not elapsed, the unit controller 17A continues execution of the adsorption mode until the adsorption mode execution time elapses.

In the step S1090, the unit controller 17A executes the scavenging mode. In this scavenging mode, the channel on/off valve 11 is closed. The adsorption potential applied to the electrochemical cell 12a remains unchanged. The communication between the channel on the downstream side of the pump 13 and the outside by the channel switching valve 14 is also maintained. In the scavenging mode, driving of the pump 13 is started. As a result, the residual atmosphere from which the carbon dioxide has been removed, remaining in the closed recovery device 12, is sucked out of the recovery device 12 and discharged to the outside.

In a step S1100, the unit controller 17A determines whether or not the scavenging mode execution time (SMET) has elapsed. The scavenging mode execution time is predetermined to a time sufficient to scavenge the residual atmosphere in the recovery device 12. If it is determined that the scavenging mode execution time has elapsed, the unit controller 17A proceeds to a process of a step S1110. On the other hand, if it is determined that the scavenging mode execution time has not elapsed, the unit controller 17A continues executing the scavenging mode until the scavenging mode execution time has elapsed.

In the step S1110, the unit controller 17A calculates a desorption mode execution time (DMET) and executes the desorption mode (CALC. DMET & EXEC. DS MODE). The unit controller 17A can determine the desorption mode execution time to be proportional to a length of the adsorption mode execution time, for example. Therefore, the desorption mode execution time (DMET) is set indirectly based on the control guideline. In the desorption mode, the channel on/off valve 11 is kept closed. The driving of the pump 13 is stopped. The desorption potential is applied to the electrochemical cell 12a. The channel switching valve 14 is controlled so that the channel on the downstream side of the pump 13 communicates with the channel connected to the CO2 recovery tank 3. However, the unit controller 17A keeps the electromagnetic valve 15 closed until this desorption mode is completed. Therefore, the electromagnetic valve 15 prevents the carbon dioxide desorbed from the electrochemical cell 12a from flowing into the channel connected to the CO 2 recovery tank 3.

In a step S1120, the unit controller 17A determines whether or not the calculated value of the desorption mode execution time has elapsed (ELAPSE DMET?). If it is determined that the calculated desorption mode execution time has elapsed, the unit controller 17A proceeds to a process of a step S1130 in the flowchart of FIG. 16. On the other hand, if it is determined that the calculated desorption mode execution time has not elapsed, the unit controller 17A continues execution of the desorption mode until the desorption mode execution time elapses.

In a step S1130, the unit controller 17A calculates an assumed CO2 recovery amount. The assumed CO2 recovery amount is calculated as being equal to the CO2 adsorption amount corresponding to the execution time of the adsorption mode. Then, in the step S1140, the unit controller 17A transmits to the main controller 1 the recovery transition request notice including the assumed CO2 recovery amount and its own identification information.

In the step S1150, the unit controller 17A determines whether or not the recovery transition permission notice has been received from the main controller 1. If the recovery transition permission notice is received, the unit controller 17A proceeds to a process of a step S1160. If the recovery transition permission notice is not received, the unit controller 17A waits until the recovery transition permission notice is received.

In a step S1160, the unit controller 17A executes the recovery mode. In the recovery mode, the channel on/off valve 11 is kept closed. The driving of the pump 13 is started again. The desorption potential continues to be applied to the electrochemical cell 12a. The channel switching valve 14 communicates the channel downstream of the pump 13 with the channel connected to the CO2 recovery tank 3. The electromagnetic valve 15 is opened. As a result, carbon dioxide desorbed from the electrochemical cell 12a flows through the electromagnetic valve 15 and is recovered in the CO2 recovery tank 3.

In the step S1170, the unit controller 17A determines whether or not the recovery completion notice has been received from the main controller 1. If the recovery completion notice is received, the unit controller 17A terminates the recovery mode in step S1180. For example, the unit controller 17A opens the channel on/off valve 11 to communicate the recovery device 12 to the outside in preparation for a start of a next one of the adsorption mode. Also, the unit controller 17A stops applying the desorption potential to the electrochemical cell 12a. The unit controller 17A stops driving the pump 13. The unit controller 17A switches the channel switching valve 14 to allow the downstream side channel of the pump 13 to communicate with the outside. Further, the unit controller 17A closes the electromagnetic valve 15.

In a step S1190, the unit controller 17A determines whether or not a feedback of the carbon dioxide recovery amount has been received from the main controller 1. If the unit controller 17A receives the feedback of the carbon dioxide recovery amount, the unit controller 17A proceeds to a process of a step S1200. On the other hand, if no feedback of the carbon dioxide recovery amount is received, the unit controller 17A waits until a feedback is received.

In the step S1200, the unit controller 17A calculates an energy consumption for a driving the blower 16, an applying voltage to the electrochemical cell 12a, a driving the pump 13, etc. while executing a series of control sequence. Then, the unit controller 17A transmits a recovery amount receipt notice to the main controller 1 in a step S1210. This recovery amount receipt notice includes the amount of energy consumption calculated in the step S1200. After that, the unit controller 17A returns to the process of the step S1010 in the flowchart of FIG. 15.

### (Second embodiment)

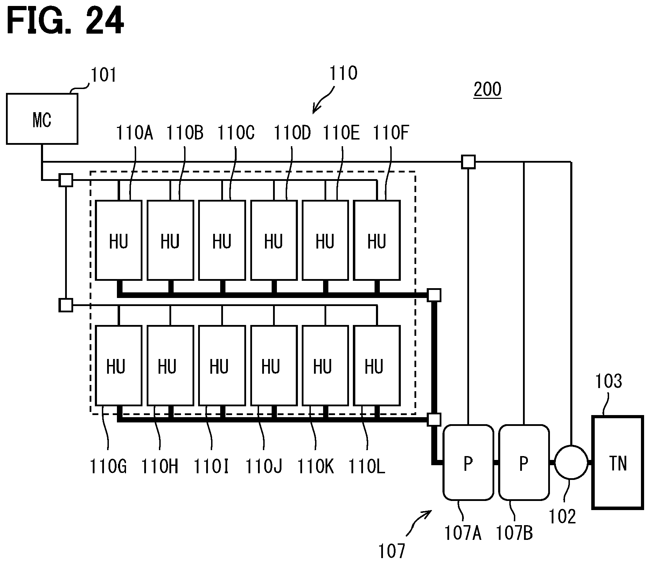

A carbon dioxide recovery system 200 according to a second embodiment of the present disclosure is described with reference to FIG. 24. In FIG. 24, the components of the carbon dioxide recovery system 200 are given reference numbers in the 100s, which are used to distinguish them from the components of the carbon dioxide recovery system 100 of the first embodiment. Among the components of the carbon dioxide recovery system 200 according to the second embodiment, the components having the same last two digit numbers may be configured in the same manner as the components of the carbon dioxide recovery system 100 according to the first embodiment.

As shown in FIG. 24, the carbon dioxide recovery system 200 according to the second embodiment is provided with a common pump (P) 107 for the plurality of recovery units 110A-110L. The pump 107 is formed by connecting two pumps 107A and 107B in series. The pump 107 is configured to vary a carbon dioxide suction force depending on whether only one of the two pumps 107A and 107B is driven or both the two pumps 107A and 107B are driven. A single pump capable of varying the suction force may be provided as the pump 107.

The pump 107 is controlled by the main controller (MC) 1 so as to suck carbon dioxide desorbed from each of the multiple recovery units 110A-110L and transfer carbon dioxide toward the CO2 recovery tank (TN) 103. In other words, the main controller 1 starts driving the pump 107 in response to outputting a recovery transfer permission notice to at least one of the recovery units 10A-10L.

Note that the plurality of recovery units 110A-110L are provided with pumps, like the pumps 13 of the recovery units 10A-10C of the first embodiment. However, since this pump only needs to scavenge the inside of the recovery device, a suction capacity may be lower than that of the pump 13 of the first embodiment.

Furthermore, the pump 13 may be removed from the plurality of recovery units 110A to 110L, and the pump 107 may be used for scavenging the inside of the recovery device. As described above, the recovery units 110A-11 0L of the second embodiment mainly adsorb and hold carbon dioxide, and are therefore also referred to as hold units (HU). Other configurations of the carbon dioxide recovery system 200 according to the second embodiment are the same as those of the carbon dioxide recovery system 100 according to the first embodiment, so description thereof is omitted. Even if it is configured like the carbon dioxide recovery system 200 according to the second embodiment, it is possible to obtain the same effects as the carbon dioxide recovery system according to the first embodiment. In this case, the main controller 1 is configured to provide each one of the unit controllers 17 of the plurality of holding units with control guidelines which serve as guidelines for controlling operations of the electrochemical cell and the channel on/off unit by the unit controllers 17. The unit controllers 17 are configured to determine control contents of the electrochemical cell and the channel on/off unit based on the control guidelines.

As described in the second embodiment, the CO2 recovery system may have the pump 107 that is common to the plurality of the hold units 110A-110L and has a variable suction force. The main controller 101 may simultaneously receive a plurality of notice requesting a transit permission to the recovery mode, etc. from the unit controller of the hold units 110A-110L. In this case, the main controller 101 may transmit a plurality of transit permissions to corresponding unit controllers in accordance with suction distances to the pump 107. For example, the main controller 101 transmits transit permissions from a unit controller for a hold unit with a shorter suction distance to a unit controller for a hold unit with a longer suction distance. This is because the shorter the suction distance to the pump 107, the more carbon dioxide the pump 107 can suck in within a short period of time. Moreover, if the suction distance from the pump 107 to the hold unit is relatively long, the main controller drives both the two pumps 107A and 107B to suck the carbon dioxide desorbed from the hold unit. On the other hand, if the suction distance to the hold unit is relatively short, the main controller drives only one of the two pumps 107A and 107B to suck carbon dioxide desorbed from the hold unit. Therefore, if the suction distance to the pump 107 is short, the energy consumed by the pump 107 can also be suppressed. This preferential recovery operation based on suction distances may be permitted if the user requests increased carbon dioxide recovery.

In this case, the carbon dioxide recovery system has a following configurations. The pump is capable of varying a suction force of carbon dioxide. The unit controllers 17 are configured to transmit a notice to request a desorption permission to the main controller 1 if the holding unit becomes capable of desorbing carbon dioxide, and to desorb carbon dioxide in the holding unit in response to receiving a notice of the desorption permission from the main controller 1. The main controller 1 is configured to transmit, in the case that a plurality of the notice to request the desorption permission are received simultaneously, the notice of the desorption permission of carbon dioxide in a preferential manner to a corresponding one of the unit controllers 17 in ascending order of carbon dioxide suction distance to the pump. The ascending order of carbon dioxide suction distance means an order from the shortest one to the longest one.

The present disclosure is explained with a preferred embodiment as described above. However, the present disclosure is not limited to the above-mentioned embodiment, and may be variously modified within the spirit and scope of the present disclosure.

For example, an idea of transmitting a plurality of transit permissions to corresponding unit controllers in accordance with suction distances to the pump 107 in an order from a short to a long may be applied to the carbon dioxide recovery system 100 according to the first embodiment. The idea of the second embodiment may be applied to the carbon dioxide recovery system 100 of the first embodiment. In this case, the main controller 1 and the unit controllers 17A-17C works as described below. First, the main controller 1 simultaneously receives a plurality of the recovery transition request notice from the unit controllers 17A-17C of the plurality of recovery units 10A-10C. Second, the main controller 1 determines an order of transit permission notices to the recovery mode based on an order of transfer distances to the CO2 recovery tank 3 from a shorter one to a longer one. Finally, the main controller 1 transmits the transit permission notices to corresponding one of the unit controllers 17A-17C in an orderly manner. This control process may be referred to as a preferential recovery based on the discharge distances.

In other words, the carbon dioxide recovery system may be configured as follows. The unit controllers 17 may be configured to transmit a notice to request a transfer permission to the main controller 1 when the recovery unit becomes capable of transferring carbon dioxide. The unit controllers 17 may be configured to transfer carbon dioxide from the recovery unit to the carbon dioxide recovery tank in response to receiving the notice of the transfer permission of carbon dioxide from the main controller1, The main controller 1 may be configured to transmit, in the case that a plurality of notices to request a transfer permission from a plurality of the unit controllers 17 are simultaneously received, the notice of the transfer permission of carbon dioxide in a preferential manner to a corresponding one of the unit controllers 17 of the recovery units in ascending order of carbon dioxide transfer distance to the carbon dioxide recovery tank. Alternatively, the main controller 1 may be configured to transmit, in the case that a user request to give priority to recovery of carbon dioxide is received, the notice of the transfer permission of carbon dioxide in a preferential manner to a corresponding one of the unit controllers 17 in ascending order of carbon dioxide transfer distance to a carbon dioxide recovery unit. The ascending order of carbon dioxide transfer distance means an order from the shortest one to the longest one. This preferential recovery operation based on the transfer distances may be permitted if the user requests increased carbon dioxide recovery.

Although the storage unit 18 is provided inside the unit controller 17 in the first embodiment described above, the storage section 18 may be provided outside the unit controller 17. Alternatively, the storage section 18 may be provided in the main controller 1.

Finally, this specification discloses a plurality of technical ideas listed below and a plurality of combinations thereof.

### (Technical Idea 1)

A carbon dioxide recovery system which recovers carbon dioxide from the atmosphere containing carbon dioxide, comprising:
a carbon dioxide recovery tank (3) which accumulates recovered carbon dioxide;
a recovery unit group (10) including a plurality of recovery units (10A-10C) connected in parallel to the carbon dioxide recovery tank, separating carbon dioxide from the atmosphere and transferring a separated carbon dioxide to the carbon dioxide recovery tank; and
a main controller (1), including at least one processor, which controls the recovery unit group, wherein
each of the plurality of recovery units included in the recovery unit group includes: an electrochemical cell (12a) which is disposed in a housing, adsorbs carbon dioxide by applying an adsorption potential and desorbs an adsorbed carbon dioxide by applying a desorption potential;
a channel on/off unit (11) which enables the housing to introduce the atmosphere by opening an inlet of the housing when adsorbing carbon dioxide to the electrochemical cell and disable the housing to isolate from the atmosphere by closing the inlet of the housing when desorbing carbon dioxide from the electrochemical cell;
a transfer unit (13, 14) which sucks carbon dioxide desorbed from the electrochemical cell from an inside of the housing and transfer carbon dioxide to a carbon dioxide recovery tank;
unit controllers (17), including at least one processor, which control operation of the electrochemical cell, the channel on/off unit and the transfer unit, wherein
the main controller is configured to provide each one of the unit controllers of the plurality of recovery units with control guidelines which serve as guidelines for controlling operations of the electrochemical cell, the channel on/off unit, and the transfer unit by the unit controllers, and wherein
the unit controllers are configured to determine control contents of the electrochemical cell, the channel on/off unit, and the transfer unit based on the control guidelines.

### (Technical Idea 2)

The carbon dioxide recovery system according to the technical idea 1, wherein the main controller is configured to provide the unit controller with one of a command to stop, a command to improve a carbon dioxide recovery amount, a command to reduce an energy consumption, a command to perform a normal operation, and a command to set an operating time as the control guideline.

### (Technical idea 3)

The carbon dioxide recovery system according to the technical idea 1 or 2, wherein
the unit controller is configured to determine, as the control content of the electrochemical cell, the channel on/off unit, and the transfer unit, at least an adsorption time in which the electrochemical cell adsorbs carbon dioxide and to control the electrochemical cell, the channel on/off unit, and the transfer unit so that the electro chemical cell adsorbs carbon dioxide for a determined adsorption time.

### (Technical Idea 4)

The carbon dioxide recovery system according to the technical idea 3, wherein the unit controller is configured to determine, as the control content of the electrochemical cell, the channel on/off unit, and the transfer unit, a desorption time in which the electrochemical cell desorbs carbon dioxide and to control the electrochemical cell, the channel on/off unit, and the transfer unit so that the electro chemical cell desorbs carbon dioxide for a determined desorption time.

### (Technical Idea 5)

The carbon dioxide recovery system according to any one of the technical ideas 1-4, wherein
the main controller is configured to provide a command to stop to the unit controller as the control guideline based on at least one of an external environment, a malfunction in the carbon dioxide recovery system, and a stop request from a user.

### (Technical Idea 6)

The carbon dioxide recovery system according to the technical idea 5, wherein
the command to stop includes a normal stop command to stop each of the recovery unit after finishing the control for carbon dioxide recovery being executed in each of the recovery unit, and an emergency stop command to stop each of the recovery unit by interrupting the control for carbon dioxide recovery being executed, and wherein
the main controller is configured to provide the normal stop command or the emergency stop command in accordance with an emergency degree of at least one of an external environment, a malfunction in the carbon dioxide recovery system, and a stop request from a user.

### (Technical Idea 7)

The carbon dioxide recovery system according to the technical idea 5 or 6, wherein
the external environment includes an occurrence of a disaster and condition of supply energy for operating the carbon dioxide recovery system.

### (Technical Idea 8)

The carbon dioxide recovery system according to any one of the technical ideas 1-7, wherein
the main controller is capable of receiving a user request regarding at least giving priority to recovery of carbon dioxide or giving priority to reducing energy consumption of the carbon dioxide recovery system, and wherein
the main controller is configured to provide the unit controller with the control guideline indicating an improvement in a carbon dioxide recovery amount if a user request giving priority to recovery of carbon dioxide is received, and wherein
the main controller is configured to provide the unit controller with the control guideline indicating reduction of energy consumption if a user request giving priority to reducing energy consumption is received.

### (Technical idea 9)

The carbon dioxide recovery system according to any one of the technical ideas 1-8, wherein
the main controller is capable of acquiring information related to weather forecasts, and wherein
the main controller is configured to provide the unit controller with the control guideline indicating an improvement in a carbon dioxide recovery amount if a decrease in the carbon dioxide recovery amount in the future is predicted based on an acquired information on the weather forecast.

### (Technical idea 10)

The carbon dioxide recovery system according to any one of the technical ideas 1-9, wherein
the main controller is configured to calculate a degree of decrease in carbon dioxide recovery amount of an entire system based on at least a total amount of carbon dioxide recovery amount by each of a plurality of the recovery units, and wherein
the main controller is configured to provide the unit controller with the control guideline indicating reduction of energy consumption if the degree of decrease in
the carbon dioxide recovery amount of the entire system exceeds a predetermined threshold.

### (Technical idea 11)

The carbon dioxide recovery system according to the technical idea 10, wherein
the main controller is configured to calculate a unit amount energy that is required to recover a predetermined unit amount of carbon dioxide by an entire system, as an index indicative of a deterioration degree in the carbon dioxide recovery amount of an entire system, based on a total amount of carbon dioxide recovered by a plurality of the recovery units and a total amount of energy consumed by a plurality of the recovery units, and wherein
the main controller is configured to assume, if the unit amount energy that is calculated exceeds a predetermined reference energy, that a lowering degree of the carbon dioxide recovery amount of the entire system exceeds a predetermined threshold.

### (Technical idea 12)

The carbon dioxide recovery system according to any one of the technical ideas 1-11, wherein
the main controller is configured to provide, in the case that a scheduled stop time of the carbon dioxide recovery system is predetermined and a predetermined time remains until the scheduled stop time, as the control guideline relating to an operation time, the unit controller with time at which the recovery unit should be ready to transfer carbon dioxide or cycle time which the recovery unit can spend to perform a cycle from an adsorption to a transfer of carbon dioxide.

### (Technical idea 13)

The carbon dioxide recovery system according to any one of the technical ideas 1-12, wherein
the unit controller is configured to transmit a notice to request a transfer permission to the main controller when the recovery unit becomes capable of transferring carbon dioxide, and to transfer carbon dioxide from the recovery unit to the carbon dioxide recovery tank in response to receiving the notice of the transfer permission of carbon dioxide from the main controller, and wherein
the main controller is configured to transmit, in the case that a plurality of notices to request a transfer permission from a plurality of the unit controllers are simultaneously received, the notice of the transfer permission of carbon dioxide to one of the unit controllers which is expected to transfer more carbon dioxide in a preferential manner.

### (Technical idea 14)

The carbon dioxide recovery system according to the technical idea 13, wherein the main controller is configured to transmit, in the case that a user request to give priority to recovery of carbon dioxide is received, the notice of the transfer permission of carbon dioxide to one of the unit controllers which is expected to transfer more carbon dioxide in a preferential manner.

### (Technical idea 15)

The carbon dioxide recovery system according to any one of the technical ideas 1-12, wherein
the unit controller is configured to transmit a notice to request a transfer permission to the main controller when the recovery unit becomes capable of transferring carbon dioxide, and to transfer carbon dioxide from the recovery unit to the carbon dioxide recovery tank in response to receiving the notice of the transfer permission of carbon dioxide from the main controller, and wherein
the main controller is configured to transmit the notice of the transfer permission of carbon dioxide simultaneously to the unit controllers corresponding to a plurality of the recovery units when the plurality of the recovery units being able to transfer carbon dioxide amounts less than a predetermined threshold only among a plurality of the unit controllers from which a plurality of notices to request a transfer permission are simultaneously received.

### (Technical idea 16)

The carbon dioxide recovery system according to the technical idea 15, wherein the main controller is configured to transmit, in the case that a user request to give priority to recovery of carbon dioxide is received, the notice of the transfer permission of carbon dioxide simultaneously to the unit controllers corresponding to a plurality of the recovery units being able to transfer only carbon dioxide amounts less than a predetermined threshold.

### (Technical idea 17)

The carbon dioxide recovery system according to any one of the technical ideas 1-12, wherein
the unit controller is configured to transmit a notice to request a transfer permission to the main controller when the recovery unit becomes capable of transferring carbon dioxide, and to transfer carbon dioxide from the recovery unit to the carbon dioxide recovery tank in response to receiving the notice of the transfer permission of carbon dioxide from the main controller, and wherein
the main controller is configured to transmit, in the case that a plurality of notices to request a transfer permission from a plurality of the unit controllers are simultaneously received, the notice of the transfer permission of carbon dioxide in a preferential manner to a corresponding one of the unit controllers of the recovery units in ascending order of carbon dioxide transfer distance to the carbon dioxide recovery tank.

### (Technical idea 18)

The carbon dioxide recovery system according to the technical idea 17, wherein the main controller is configured to transmit, in the case that a user request to give priority to recovery of carbon dioxide is received, the notice of the desorption permission of carbon dioxide in a preferential manner to a corresponding one of the unit controllers in ascending order of carbon dioxide transfer distance to a carbon dioxide recovery unit.

## Claims

1. A carbon dioxide recovery system which recovers carbon dioxide from the atmosphere containing carbon dioxide, comprising:
a carbon dioxide recovery tank (3, 103) which accumulates recovered carbon dioxide;
a recovery unit group (10, 110) including a plurality of recovery units (10A-10C, 110A-11 0C) connected in parallel to the carbon dioxide recovery tank, separating carbon dioxide from the atmosphere and transferring a separated carbon dioxide to the carbon dioxide recovery tank; and
a main controller (1), including at least one processor, which controls the recovery unit group, wherein
each of the plurality of recovery units included in the recovery unit group includes:
an electrochemical cell (12a) which is disposed in a housing, adsorbs carbon dioxide by applying an adsorption potential and desorbs an adsorbed carbon dioxide by applying a desorption potential;
a channel on/off unit (11) which enables the housing to introduce the atmosphere by opening an inlet of the housing when the electrochemical cell adsorbs carbon dioxide and disable the housing to isolate from the atmosphere by closing the inlet of the housing when the electrochemical cell desorbs carbon dioxide;
a transfer unit (13, 14) or a pump (107) which sucks carbon dioxide desorbed from the electrochemical cell from an inside of the housing and transfer carbon dioxide to the carbon dioxide recovery tank;
unit controllers (17), including at least one processor, which control operation of a first set of components including the electrochemical cell and the channel on/off unit, or a second set of components including the electrochemical cell, the channel on/off unit, and the transfer unit, wherein
the main controller is configured to provide each one of the unit controllers of the plurality of recovery units with control guidelines which serve as guidelines for controlling operations of the first set of components including the electrochemical cell and the channel on/off unit by the unit controllers, or the second set of components including the electrochemical cell, the channel on/off unit, and the transfer unit by the unit controllers, and wherein
the unit controllers are configured to determine control contents of the first set of components including the electrochemical cell and the channel on/off unit based on the control guidelines, or the second set of components including the electrochemical cell, the channel on/off unit, and the transfer unit based on the control guidelines.

2. The carbon dioxide recovery system according to claim 1, wherein
the main controller is configured to provide the unit controller with one of a command to stop, a command to improve a carbon dioxide recovery amount, a command to reduce an energy consumption, a command to perform a normal operation, and a command to set an operating time as the control guideline.

3. The carbon dioxide recovery system according to claim 1 or 2, wherein
the unit controller is configured to determine, as the control content of the electrochemical cell, the channel on/off unit, and the transfer unit, at least an adsorption time in which the electrochemical cell adsorbs carbon dioxide and to control the electrochemical cell, the channel on/off unit, and the transfer unit so that the electro chemical cell adsorbs carbon dioxide for a determined adsorption time.

4. The carbon dioxide recovery system according to claim 3, wherein
the unit controller is configured to determine, as the control content of the electrochemical cell, the channel on/off unit, and the transfer unit, a desorption time in which the electrochemical cell desorbs carbon dioxide and to control the electrochemical cell, the channel on/off unit, and the transfer unit so that the electro chemical cell desorbs carbon dioxide for a determined desorption time.

5. The carbon dioxide recovery system according to any one of claims 1-4, wherein
the main controller is configured to provide a command to stop to the unit controller as the control guideline based on at least one of an external environment, a malfunction in the carbon dioxide recovery system, and a stop request from a user.

6. The carbon dioxide recovery system according to claim 5, wherein
the command to stop includes a normal stop command to stop each of the recovery unit after finishing the control for carbon dioxide recovery being executed in each of the recovery unit, and an emergency stop command to stop each of the recovery unit by interrupting the control for carbon dioxide recovery being executed, and wherein
the main controller is configured to provide the normal stop command or the emergency stop command in accordance with an emergency degree of at least one of an external environment, a malfunction in the carbon dioxide recovery system, and a stop request from a user.

7. The carbon dioxide recovery system according to claim 5 or 6, wherein
the external environment includes an occurrence of a disaster and condition of supply energy for operating the carbon dioxide recovery system.

8. The carbon dioxide recovery system according to any one of claims 1-7, wherein
the main controller is capable of receiving a user request regarding at least giving priority to recovery of carbon dioxide or giving priority to reducing energy consumption of the carbon dioxide recovery system, and wherein
the main controller is configured to provide the unit controller with the control guideline indicating an improvement in a carbon dioxide recovery amount if a user request giving priority to recovery of carbon dioxide is received, and wherein the main controller is configured to provide the unit controller with the control guideline indicating reduction of energy consumption if a user request giving priority to reducing energy consumption is received.

9. The carbon dioxide recovery system according to any one of claims 1-8, wherein
the main controller is capable of acquiring information related to weather forecasts, and wherein
the main controller is configured to provide the unit controller with the control guideline indicating an improvement in a carbon dioxide recovery amount if a decrease in the carbon dioxide recovery amount in the future is predicted based on an acquired information on the weather forecast.

10. The carbon dioxide recovery system according to any one of claims 1-9, wherein
the main controller is configured to calculate a degree of decrease in carbon dioxide recovery amount of an entire system based on at least a total amount of carbon dioxide recovery amount by each of a plurality of the recovery units, and wherein
the main controller is configured to provide the unit controller with the control guideline indicating reduction of energy consumption if the degree of decrease in the carbon dioxide recovery amount of the entire system exceeds a predetermined threshold.

11. The carbon dioxide recovery system according to claim 10, wherein
the main controller is configured to calculate a unit amount energy that is required to recover a predetermined unit amount of carbon dioxide by an entire system, as an index indicative of a deterioration degree in the carbon dioxide recovery amount of an entire system, based on a total amount of carbon dioxide recovered by a plurality of the recovery units and a total amount of energy consumed by a plurality of the recovery units, and wherein
the main controller is configured to assume, if the unit amount energy that is calculated exceeds a predetermined reference energy, that a lowering degree of the carbon dioxide recovery amount of the entire system exceeds a predetermined threshold.

12. The carbon dioxide recovery system according to any one of claims 1-11, wherein
the main controller is configured to provide, in the case that a scheduled stop time of the carbon dioxide recovery system is predetermined and a predetermined time remains until the scheduled stop time, as the control guideline relating to an operation time, the unit controller with time at which the recovery unit should be ready to transfer carbon dioxide or cycle time which the recovery unit can spend to perform a cycle from an adsorption to a transfer of carbon dioxide.

13. The carbon dioxide recovery system according to any one of claims 1-12, wherein
the unit controller is configured to transmit a notice to request a transfer permission to the main controller when the recovery unit becomes capable of transferring carbon dioxide, and to transfer carbon dioxide from the recovery unit to the carbon dioxide recovery tank in response to receiving the notice of the transfer permission of carbon dioxide from the main controller, and wherein
the main controller is configured to transmit, in the case that a plurality of notices to request a transfer permission from a plurality of the unit controllers are simultaneously received, the notice of the transfer permission of carbon dioxide to one of the unit controllers which is expected to transfer more carbon dioxide in a preferential manner.

14. The carbon dioxide recovery system according to claim 13, wherein
the main controller is configured to transmit, in the case that a user request to give priority to recovery of carbon dioxide is received, the notice of the transfer permission of carbon dioxide to one of the unit controllers which is expected to transfer more carbon dioxide in a preferential manner.

15. The carbon dioxide recovery system according to any one of claims 1-12, wherein
the unit controller is configured to transmit a notice to request a transfer permission to the main controller when the recovery unit becomes capable of transferring carbon dioxide, and to transfer carbon dioxide from the recovery unit to the carbon dioxide recovery tank in response to receiving the notice of the transfer permission of carbon dioxide from the main controller, and wherein
the main controller is configured to transmit the notice of the transfer permission of carbon dioxide simultaneously to the unit controllers corresponding to a plurality of the recovery units when the plurality of the recovery units being able to transfer carbon dioxide amounts less than a predetermined threshold among a plurality of the unit controllers from which a plurality of notices to request a transfer permission are simultaneously received.

16. The carbon dioxide recovery system according to claim 15, wherein
the main controller is configured to transmit, in the case that a user request to give priority to recovery of carbon dioxide is received, the notice of the transfer permission of carbon dioxide simultaneously to the unit controllers corresponding to a plurality of the recovery units being able to transfer only carbon dioxide amounts less than a predetermined threshold.

17. The carbon dioxide recovery system according to any one of claims 1-12, wherein
the unit controller is configured to transmit a notice to request a transfer permission to the main controller when the recovery unit becomes capable of transferring carbon dioxide, and to transfer carbon dioxide from the recovery unit to the carbon dioxide recovery tank in response to receiving the notice of the transfer permission of carbon dioxide from the main controller, and wherein
the main controller is configured to transmit, in the case that a plurality of notices to request a transfer permission from a plurality of the unit controllers are simultaneously received, the notice of the transfer permission of carbon dioxide in a preferential manner to a corresponding one of the unit controllers of the recovery units in ascending order of carbon dioxide transfer distance to the carbon dioxide recovery tank.

18. The carbon dioxide recovery system according to claim 17, wherein
the main controller is configured to transmit, in the case that a user request to give priority to recovery of carbon dioxide is received, the notice of the transfer permission of carbon dioxide in a preferential manner to a corresponding one of the unit controllers in ascending order of carbon dioxide transfer distance to a carbon dioxide recovery unit.

19. The carbon dioxide recovery system according to claim 1, wherein
the pump is capable of varying a suction force of carbon dioxide, and wherein
the unit controller is configured to transmit a notice to request a desorption permission to the main controller if the holding unit becomes capable of desorbing carbon dioxide, and to desorb carbon dioxide in the holding unit in response to receiving a notice of the desorption permission from the main controller, and wherein
the main controller is configured to transmit, in the case that a plurality of the notice to request the desorption permission are received simultaneously, the notice of the desorption permission of carbon dioxide in a preferential manner to a corresponding one of the unit controllers in ascending order of carbon dioxide suction distance to the pump.
